# EUROPÄISCHE PATENTSCHRIFT

(11) **EP 3 235 623 B1**
(45) Veröffentlichungstag und Bekanntmachung des Hinweises auf die Patenterteilung: **06.04.2022**
(21) Anmeldenummer: 17154726.8
(22) Anmeldetag: 06.02.2017
(51) Int. Cl.: B29C 48/07, B29C 48/25, B29C 48/20, B29C 48/70, B29D 30/52

(54) **STEIGDÜSE, EXTRUSIONSWERKZEUG UND VERFHAREN ZUR HERSTELLUNG EINES STREIFENS IN EINEM MATERIALSTRANG**
NOZZLE, EXTRUSION TOOL AND METHOD FOR THE PRODUCTION OF A STRIP IN A MATERIAL STRUCTURE
BUSE, OUTIL D'EXTRUSION ET PROCÉDÉ POUR LA PRODUCTION D'UNE BANDE DANS UNE STRUCTURE MATERIELLE

(30) Priorität: 22.04.2016 DE 102016206907
(43) Veröffentlichungstag der Anmeldung: 25.10.2017
(73) Patentinhaber: Continental Reifen Deutschland GmbH, 30165 Hannover (DE)
(72) Erfinder: Veloso, Jorge, 4760-806 Lousado (PT); Fernandes, Bruno, 4485-518 Vila Cha (PT); Rennmann, Tim, 30177 Hannover (DE)
(74) Vertreter: Continental Corporation

(56) Entgegenhaltungen:
- EP-A1- 0 925 903
- EP-A1- 2 147 770
- EP-A2- 2 174 770
- WO-A1-2013/051930
- JP-A- 2000 343 580

## Beschreibung

Die Erfindung betrifft eine Steigdüse und ein Extrusionswerkzeug zur Herstellung eines Streifens in einem Materialstrang für einen Reifen, sowie ein Verfahren und einen Fahrzeugreifen.

Reifen bezeichnet einen die Felge umgebenden Teil eines Rades von Fahrzeugen. Der Begriff Reifen umfasst in dieser Schrift Notlaufreifen, Fahrzeugreifen, Fahrzeugluftreifen sowie Fahrzeugluftreifen mit Notlaufeigenschaften.

Die Verwendung von Kieselsäure-basierten Mischungen für Reifen-Laufflächen hat zu einer deutlich gesteigerten Leistungsfähigkeit der Reifen geführt. Da Kieselsäure-Mischungen nur eine schlechte elektrische Leitfähigkeit besitzen, wird bei der Reifenfertigung ein kleiner Bereich mit einer Elastomer-Mischung mit elektrisch leitendem Industrieruß in den Laufstreifen eingebracht, um die elektrostatische Aufladung im Reifen zu verhindern. Dieser Bereich muss hierbei von der Profiloberseite bis zur Profilunterseite geführt werden, um so eine Ableitung der elektrischen Ladung zu ermöglichen. Hierbei wird der leitende Streifen, der von der Laufstreifen-Oberseite zur Laufstreifen-Unterseite geführt wird, ebenfalls durch die leitfähige Unterplatten-Mischung ausgeführt. Die Erzeugung des leitfähigen Streifens erfordert bisher für jede mögliche Position des leitfähigen Streifens die kostenintensive Herstellung eines separaten Extrusionswerkzeuges. Auch ist es bisher nicht möglich die Position des leitfähigen Streifens kurzfristig zu ändern.

Dokument EP 0 925 903 A1 offenbart ein Verfahren zur Herstellung eines unvulkanisierten Laufflächengummis für Luftreifen, wobei mindestens eine Art von schlecht leitendem, unvulkanisiertem Gummi (A) und mindestens eine Art von gut leitendem, unvulkanisiertem Gummi (B) einer jeweiligen Extrudereinheit (1, 2) auf der stromaufwärts gelegenen Seite eines gemeinsamen Extrusionskopfes (4) zugeführt werden, und dadurch bewirkt wird, daß die Gummis längs jeweiliger Durchgänge (4a, 4b) in dem Extrusionskopf fließen und dann auf der Rückseite einer Extrusionsdüse ( 6, 6b) in dem Extrusionskopf miteinander vereinigt werden, bevor sie aus der Extrusionsdüse als ein integrierter Verbundkörper ( 17-1 ), der dem unvulkanisierten Laufflächengummi entspricht, kontinuierlich extrudiert werden (vgl. Anspruch 1).

Dokument EP 2 174 770 A2 offenbart eine Spleißstange (1) zum Führen und Vereinigen eines ersten Kautschukstroms mit einem zweiten Kautschukstrom in einer Reifenkomponenten-Extrudiervorrichtung, wobei die Spleißstange (1) aufweisend: eine erste Oberfläche (4) zum Führen eines ersten Kautschukstroms; eine zweite Oberfläche (5) zum Führen eines zweiten Kautschukstroms, wobei die erste und die zweite Oberfläche (4, 5) stromabwärts zusammenlaufen, um den ersten und den zweiten Kautschukstrom zu vereinigen; eine dritte Oberfläche, die die erste und die zweite Oberfläche (4, 5) stromaufwärts schneidet; einen Kaminblock (2), der sich von der ersten Fläche (4) erstreckt; einen Schlitz (3), der an einer stromabwärtigen Seite des Kaminblocks (2) vorgesehen ist und sich im Wesentlichen entlang des Kaminblocks (2) erstreckt; eine Passage (10), die zwischen dem Schlitz (3) und der zweiten Oberfläche (5) angeordnet ist, um den Schlitz (3) mit der zweiten Oberfläche (5) zu verbinden, um einen Gummistreifen von dem zweiten Strom zu dem ersten Strom durchzuführen der Schlitz (3) während eines Extrusionsprozesses; wobei der Durchgang (10) so geformt ist, dass er einen im Wesentlichen geraden Durchgang zwischen der dritten Oberfläche und dem Schlitz (3) bildet (vgl. Anspruch 1). Dokument WO 2013/051930 A1 offenbart einen Fahrzeugreifen, umfassend einen Laufflächenabschnitt (20) und eine Packung (12) von Verstärkungsschichten, die unterhalb von dem Laufflächenabschnitt (20) angeordnet sind, wobei der Laufflächenabschnitt (20) eine Laufflächenschicht (21) umfasst, die einen Boden bereitstellt Berührungsfläche (23) und ist in einem radial äußeren Teil des Reifens angeordnet, und eine Laufflächengrundschicht (26), die unterhalb der Laufflächenschicht (21) angeordnet ist, wobei der Laufflächenabschnitt (20) ferner mindestens ein Gummielement (30a, 30b), die sich in der radialen Richtung (3) des Reifens von der Bodenkontaktfläche (23) zu dem Verstärkungspaket (12) erstreckt (vgl. Anspruch 1).

Dokument JP 2000 343580 A offenbart eine Extrusionsformvorrichtung umfassend eine auf der stromaufwärtigen Seite gelegenen Kappe 21 mit einer Extrusionsöffnung 12, die einer Endform entspricht, eine Vorform 10 mit einem Formkanal 21 für leitfähigen Gummi und einem Formkanal 11 für nichtleitenden Gummi (vgl. Abstract).

Dokument EP 2147770 A1 offenbart einen Kautschukextruder, der die Extrusionsformung eines unvulkanisierten Kautschukextrudats realisiert und die Herstellung eines hochwertigen Reifens ohne Erhöhung der Reifenherstellungsschritte gewährleistet (vgl. Abstract).

Die DE 198 02 088 A1 offenbart einen Fahrzeugreifen zur Montage auf eine elektrisch leitende Felge, der eine radial äußere Laufgummischicht aufweist, die einen spezifischen elektrischen Widerstand > 10¹⁰ Ohm × cm besitzt. Die schlecht leitende radial äußere Laufgummischicht weist zumindest eine in Reifenumfangsrichtung umlaufende radial außen die Fahrbahn berührende und radial innen mit zumindest einen Teil des Reifens in Verbindung stehende filmschichtartige Zone auf, deren Werkstoff einen spezifischen elektrischen Widerstand < 10⁸ Ohm × cm besitzt. Die filmschichtartige Zone wird bei der Herstellung des Reifens durch eine auf Trennflächen des Laufstreifens aufgebrachte Lösung aus Kautschuk und/oder Kunststoff erzeugt. Das Aufbringen der Lösung auf die Trennflächen hat sich als aufwendig und daher kostenintensiv erwiesen.

Der Erfindung liegt daher die Aufgabe zu Grunde, Vorrichtungen und ein Verfahren zum Betrieb der Vorrichtungen zur Verfügung zu stellen, wodurch eine kurzfristige und kostengünstige Positionierung eines leitfähigen Streifens in einem Materialstrang ermöglicht wird.

Gelöst wird diese Aufgabe erfindungsgemäß durch eine Steigdüse zur Herstellung eines Materialstrangs mit den Merkmalen des Anspruchs 1.

Die die Steigdüse passierende extrudierbare Masse wird somit in die mindestens eine weitere extrudierbare Masse hochgezogen beziehungsweise durch den entstehenden Staudruck durch die Steigdüse hochgedrückt. Speziell für asymmetrische Reifen kann somit die Austrittsposition der leitfähigen Mischung durch die Steigdüse frei auf der Lauffläche variiert werden. Die Typenvielfalt der Reifenfabrikate bestimmen die Mischungs-, Dimensions- und Programmwechsel innerhalb der Produktionslinien. Reifenhersteller haben durch den Einsatz mindestens einer Steigdüse die Möglichkeit, den Aufbau ihrer Produkte weiter zu optimieren und zu individualisieren.

Die mindestens zwei unterschiedlichen extrudierbaren Massen unterscheiden sich in ihren chemischen und/oder physikalischen Eigenschaften. Die mindestens zwei unterschiedlichen extrudierbaren Massen können aus unterschiedlichen Substanzen gebildet sein. Beispielsweise können die extrudierbaren Massen unterschiedliche Farben aufweisen, somit kann mit der Steigdüse ein farbiger Streifen erzeugt werden.

Die Steigdüse teilt den Massenstrom aus mindestens zwei unterschiedlichen extrudierbaren Massen und fügt zwischen beide unterschiedlichen extrudierbaren Massen einen Streifen aus der unteren extrudierbaren Masse ein. Die mindestens zwei unterschiedlichen extrudierbaren Massen werden von mindestens zwei unterschiedlichen Extrudern zugeführt, wobei sich in der Sicht quer zu dem Massenstrom zwei Schichten beziehungsweise Lagen aus den mindestens zwei unterschiedlichen extrudierbaren Massen ausbilden. Zwischen diese mindestens zwei Lagen aus unterschiedlichen extrudierbaren Massen wird über die gesamte Höhe ein Streifen gebildet aus einer extrudierbaren Masse eingefügt.

Weiterhin ist erfindungsgemäß vorgesehen, dass der Fließkanal ausgehend von dem Düseneintritt eine Steigung mit einem Winkel zur Überwindung eines Höhenunterschiedes in Richtung der Auslassöffnung aufweist. Hierdurch wird die Überwindung des Höhenunterschiedes durch die die Steigdüse passierende extrudierbare Masse begünstigt. Die extrudierbare Masse fließt somit eine "schiefe Ebene" hinauf.

Weiterhin ist erfindungsgemäß vorgesehen, dass der Fließkanal ausgehend von dem Düseneintritt in Richtung der Auslassöffnung trichterförmig ausgebildet ist. Durch die trichterförmige Ausbildung des Fließkanals in der Steigdüse beziehungsweise als in Fließrichtung sich stetig verengendes Rohrstück ausgebildeten Fließkanal, erhöht sich die Geschwindigkeit der hindurchfließenden extrudierbaren Masse. Hierdurch reißt der Massenstrom der extrudierbaren Masse trotz des zu überwindenden Höhenunterschieds nicht ab. Der Fließkanal ist strömungsoptimiert und weist den gleichen oder einen geringeren Druckverlust wie die übrigen Bereiche zur Zuführung der extrudierbaren Masse auf.

Weiterhin ist erfindungsgemäß vorgesehen, dass der Düseneintritt eine eillinienförmige Einlasskontur aufweist, wobei die Einlasskontur mit ihrer kleineren Spitze senkrecht nach unten an einer senkrechten Symmetrieachse ausgerichtet ist. Somit nimmt die Einlasskontur im unteren Bereich weniger extrudierbare Masse als im oberen Bereich auf.

Weiterhin ist erfindungsgemäß vorgesehen, dass die Auslassöffnung eine trapezförmige Auslasskontur aufweist, wobei die Auslasskontur mit ihrer kürzeren parallelen Linie senkrecht nach unten an der senkrechten Symmetrieachse ausgerichtet ist. Hierdurch kann im unteren Bereich der Auslassöffnung weniger extrudierbare Masse die Auslassöffnung passieren. Die Verhältnisse von Einlasskontur und Auslasskontur korrespondieren somit. Beide lassen im unteren Bereich einen geringeren Massenstrom als im oberen Bereich zu.

Weiterhin ist erfindungsgemäß vorgesehen, dass die trapezförmige Auslasskontur der Auslassöffnung ein gleichschenkliges oder symmetrisches Trapez ausbildet. Hierdurch erhält der aus dem Massenstrom der extrudierbaren Masse zu bildende Streifen eine gleichmäßige Kontur in Fließrichtung.

Weiterhin ist erfindungsgemäß vorgesehen, dass eine Kante am Aufsatz, gebildet aus zwei im spitzen Winkel angeordneten Stegen, zum Teilen des Massenstroms mindestens einer extrudierbaren Masse, vorgesehen ist. Dies ermöglicht das Umfließen des Aufsatzes durch mindestens eine extrudierbare Masse. Hierdurch wird der Raum zum Einbringen des Streifens geschaffen. Dieser Bereich kann wie der Bugsteven eines Schiffes ausgeformt sein, statt Wasser teilt er den Massenstrom mindestens einer extrudierbaren Masse.

Gelöst wird diese Aufgabe weiterhin erfindungsgemäß durch ein Extrusionswerkzeug aufweisend ein Unterteil, ein Oberteil, eine zwischen Unterteil und Oberteil angeordnete Durchtrittsöffnung für mindestens eine extrudierbare Masse zur Erzeugung eines Materialstrangs, wobei in dem Unterteil im Bereich der Durchtrittsöffnung mindestens eine Steigdüse angeordnet ist, zur Erzeugung eines Streifens in dem Materialstrang aus einer extrudierbaren Masse, welche in ihren chemischen und/oder physikalischen Eigenschaften von mindestens einer weiteren extrudierbaren Masse abweicht. Die Position der Steigdüse ist innerhalb der Ausdehnung der Durchtrittsöffnung frei wählbar. Es können auch mehrere Steigdüsen platziert werden. Durch mindestens eine Steigdüse kann kurzfristig, ohne die Herstellung eines neuen Extrusionswerkzeuges die Position des Streifens innerhalb des Materialstrangs geändert werden. Hierdurch werden Werkzeugkosten und Standzeiten der Produktionsanlagen eingespart. Die Herstellkosten für den derart produzierten Materialstrang sinken. Auf Kundenanforderungen bezüglich der Position des Streifens kann kurzfristig reagiert werden.

Die mindestens eine Steigdüse wird kraft-, form- und/oder kraftschlüssig am Unterteil und/oder am Oberteil des Extrusionswerkzeuges festgelegt.

Weiterhin ist erfindungsgemäß vorgesehen, dass in dem Unterteil eine Rückwandöffnung vorgesehen ist, zur Speisung der Steigdüse mit extrudierbarer Masse. Die Rückwandöffnung stellt die einzige erforderliche Veränderung am Extrusionswerkzeug bei einer Veränderung der Position der Steigdüse innerhalb der Durchtrittsöffnung dar. Diese Rückwandöffnung kann kurzfristig verschlossen werden, beispielsweise stoffschlüssig durch ein Schweißverfahren. An der neuen Position der Steigdüse kann die Rückwandöffnung kurzfristig geschaffen werden, beispielsweise durch ein spanabhebendes Verfahren wie Fräsen oder Bohren.

Die mindestens eine Steigdüse kann beispielsweise in eine Aussparung in dem Unterteil und/oder dem Oberteil des Extrusionswerkzeuges im Bereich der Rückwandöffnung aufgenommen sein. Weiterhin ist es denkbar, die mindestens eine Steigdüse durch eine Klemmvorrichtung im Unterteil und/oder im Oberteil des Extrusionswerkzeuges im Bereich der Rückwandöffnung lagerichtig zu fixieren. Alternativ kann die mindestens eine Steigdüse durch Schweißen oder Kleben im Unterteil und/oder im Oberteil des Extrusionswerkzeuges im Bereich der mindestens einen Rückwandöffnung fixiert werden. In einer Ausgestaltung weist die mindestens eine Steigdüse einen Aufsatzkragen auf. Dieser dient vorteilhaft zur Fixierung der mindestens einen Steigdüse im Oberteil des Extrusionswerkzeuges. Dieser Aufsatzkragen ist bei der Draufsicht auf die mindestens eine Steigdüse kreisförmig ausgebildet und weist eine U-förmige Ausnehmung auf. Diese Ausnehmung befindet sich auf der der Düseneintrittsöffnung gegenüberliegenden Seite des Aufsatzes der mindestens einen Steigdüse.

Gelöst wird die Aufgabe erfindungsgemäß durch ein Verfahren mit den Merkmalen des Anspruchs 9. Hierdurch wird mit Hilfe der Steigdüse die Einbringung eines Streifens in Förderrichtung der extrudierbaren Massen ermöglicht. Dieser Streifen durchdringt eine der extrudierbaren Massen vollständig und besteht aus einer in ihren chemischen und/oder physikalischen Eigenschaften von der durchdrungenen extrudierbaren Masse abweichenden extrudierbaren Masse. Durch diese Verfahren ist der Streifen innerhalb des Materialstrangs frei positionierbar. Die Position des Streifens kann kurzfristig durch Versetzen der mindestens einen Steigdüse geändert werden.

Weiterhin ist erfindungsgemäß vorgesehen, dass die extrudierbaren Massen aus Gummi-Mischungen gebildet sind. Kautschuk- beziehungsweise Gummi-Mischungen bilden die Grundlage zur Herstellung von Elastomeren-Halbzeugen beziehungsweise Elastomeren-Erzeugnissen.

Weiterhin ist erfindungsgemäß vorgesehen, dass die durch die Steigdüse geförderte extrudierbare Masse elektrisch leitfähig ausgeführt ist. Hierdurch kann vorteilhaft ein elektrisch leitfähiger Streifen in eine ihn umgebene nicht leitfähige extrudierbare Masse eingebracht werden. Dieser elektrisch leitfähige Streifen stellt den Kontakt zwischen zwei leitenden Bereichen her und kann somit einen Bereich aus nicht elektrisch leitender extrudierbarer Masse überbrücken.

Die Begriffe Elastomere, Gummi, Kautschuk, Gummimaterial, Gummiwerkstoff sowie Gummimassen werden als Synonyme betrachtet.

Unter dem Begriff Gummi-Mischung versteht diese Schrift einen Werkstoff, insbesondere aus der Gruppe der Elastomere mit viskoelastischen Eigenschaften. Die Gummi-Mischung kann auf Kautschuk und/oder anderen kautschukähnlichen Pflanzensäften basieren, die beim Eintrocknen vorzugsweise durch Polymerisation zu plastisch-elastischen Feststoffen verhärten.

Zur Ausführung der vorliegenden Erfindung kann ebenso natürlicher Kautschuk sowie synthetisch hergestellter Kautschuk verwendet werden. Die Gummi-Mischung umfasst einen vulkanisierten Kautschuk und ist insbesondere als elastischer und relativ strapazierfähiger Feststoff bekannt. Bei der Herstellung der Gummi-Mischung werden dem natürlichen und/oder dem synthetischem Kautschuk weitere feste und/oder flüssige Inhaltsstoffe zugeführt und mit diesem/n vermengt. Unter Vermengen wird vorliegend auch Vermischen verstanden.

Synthesekautschuke sind beispielsweise Styrol-Kautschuk, Styrol-Butadien-Kautschuk, Butadien-Kautschuk, Acryinitril-Butadien-Kautschuk, Butylkautschuk, Etylen-Propylen-Dien-Kautschuk, Chloropren-Kautschuk und Polyisopren-Kautschuk. Die Aufzählung ist nur beispielhaft und in keiner Weise als abschließend anzusehen.

Derartige Gummi-Mischungen bzw. Kautschukmischungen weisen alle eine komplexe Rezeptur auf mit im einfachsten Fall sieben bis acht Bestandteilen, für spezielle Anforderungen bis zu zwanzig Bestandteilen, jeweils auf den Einsatzzweck abgestimmt. Im Zusammenhang mit der vorliegenden Schrift sind Inhaltstoffe beispielhaft und in keiner Weise ausschließlich Kautschuk, Lösungsmittel, Weichmacher, Vernetzungssysteme aus Vulkanisationsbeschleuniger, Vulkanisationsverzögerer, Aktivatoren, Kieselsäure, Industrieruß, Pigmente, Füllstoffe, Harze, Haftmittel, flammhemmende Zusätze, Ozon- und Alterungsschutzmittel.

Die Auswahl der Inhaltsstoffe hängt unter anderen von der Anwendung der Gummi-Mischung und damit auch von den Produktanforderungen sowie von den Kosten ab. Diese Parameter haben einen nicht unerheblichen Einfluss auf die Wahl des Kautschuks und des Verstärkungssystems.

Bei Reifenmischungen ist beispielsweise Kieselsäure ein wichtiger Rezepturbestandteil. So profitieren Reifen etwa von der Verstärkung durch ein spezielles SiO₂-System, da hierdurch gegenüber den traditionell nur mit Industrieruß gefüllten Gummimischungen zum einen Treibstoff eingespart werden kann und weil gleichzeitig die Sicherheitsleistungen verbessert werden. Jedoch weisen diese Gummi-Mischungen mit einem hohen Kieselsäure-Anteil nur eine geringe oder keine Leitfähigkeit auf.

Extrusionsanlagen zur Herstellung von Reifenkomponenten aus Gummi-Mischungen können beispielsweise bis zu fünf Extruder aufweisen. Sie bieten bei der Herstellung von Reifen die Möglichkeit, zusätzliche leitfähige oder andere Gummi-Mischungen in den Laufstreifen einzubringen.

Bei der Weiterentwicklung der Laufflächenmischungen wird vermehrt Kieselsäure statt Industrieruß zugesetzt, um insbesondere das Fahrzeugverhalten auf nasser Straße zu verbessern, den Bremsweg zu verkürzen oder den Rollwiderstand zu reduzieren und dadurch auch den Kraftstoffverbrauch zu senken.

Mit der Extrusionsanlage in Kombination mit mindestens einer erfindungsgemäßen Steigdüse steht Reifenherstellern eine Extrusionslösung zur Verfügung, mit der sich beispielsweise bis zu fünf Reifenbauteile mit unterschiedlichen Mischungen, in einem Arbeitsgang zu einem Laufstreifen zusammenfügen lassen. Durch diese Extrusionsanlage können somit bis zu fünf verschiedene extrudierbare Massen verarbeitet werden. Es kann somit mindestens eine umgebende extrudierbare Masse für die aus der Steigdüse hinzukommende extrudierbare Masse gefördert werden. Es können auch mehrere Steigdüsen für bis zu vier von der umgebenden extrudierbaren Masse in ihrer Zusammensetzung abweichende extrudierbare Massen gespeist werden. Die lediglich durch die Breite des Extrusionswerkzeugs limitierte Anzahl an Steigdüsen kann auch mit einer identischen extrudierbaren Masse beschickt werden.

Eine extrudierbare Masse kann beispielsweise aus einer Kautschukmischung oder Gummimischung gebildet sein. Diese extrudierbaren Massen können zur Herstellung von Elastomer-Halbzeugen zur Produktion von Elastomer-Erzeugnissen dienen, wie beispielsweise Reifen, Transportbändern, Schläuchen, Luftfederbälge, Antriebsriemen, Membrane, Schwingungsdämpfer und weiteren Gummiprodukten.

Unter einer nicht oder zumindest schlecht elektrisch leitenden extrudierbaren Masse, wird eine extrudierbare Masse verstanden, die einen spezifischen elektrischen Widerstand > 10¹⁰ Ohm × cm besitzt.

Unter einer elektrisch leitenden extrudierbaren Masse, wird eine extrudierbare Masse verstanden, die einen spezifischen elektrischen Widerstand < 10⁸ Ohm × cm besitzt. Die Leitfähigkeit der extrudierbaren Masse kann durch die Zugabe von kohlenstoffhaltigen Substanzen, insbesondere durch die Zugabe von Industrieruß erzeugt werden.

Industrieruß (englisch Carbon Black) ist gezielt hergestellter elementarer Kohlenstoff in der Form von kolloidalen Partikeln, hergestellt durch unvollständige Verbrennungsprozesse oder thermische Zersetzung von gasförmigen oder flüssigen Kohlenwasserstoffen unter kontrollierten Bedingungen. Es fällt als schwarzes, feines Pulver an. Dem gegenüber steht der Ruß, beispielsweise Kamin- oder Dieselruß, der als undefiniertes Nebenprodukt bei der Verbrennung von Kohle bzw. Kohlenwasserstoffen entsteht. Industrieruß besteht zu mehr als 96 % aus amorphem Kohlenstoff und geringen Mengen an Sauerstoff, Wasserstoff, Stickstoff und Schwefel. Die meisten dieser Elemente sind an der Oberfläche konzentriert. Der Sauerstoffgehalt von nachträglich oxidiertem Industrieruß kann bis zu 15 % betragen. Besitzt der Industrieruß kleine Primärteilchen und hat weitverzweigte Aggregate, so ermöglicht er eine elektrische Leitfähigkeit in der extrudierbaren Masse. Der Industrieruß wird in dieser Anwendung daher auch als Leitruß oder Leitfähigkeitsruß bezeichnet.

Unter Streifen wird ein langer, schmaler abgegrenzter Teil, ein Abschnitt des Materialstrangs beziehungsweise Laufstreifens verstanden. Im Laufstreifen erfährt der Streifen seine Längserstreckung in Umfangsrichtung des Reifens.

Durch das Einbringen mindestens eines leitfähigen Streifens beziehungsweise Stegs, in den Laufstreifen, wird die Möglichkeit zur Entladung bei Laufflächen mit hohem Kieselsäure-Anteil verbessert. Dieser sorgt dafür, dass die elektrostatischen Ladungen in die Fahrbahn abgeleitet werden. Dieser leitfähige Streifen wird auch als "Chimney", Carbon-Center-Beam oder schmaler Kanal bezeichnet.

Weitere Merkmale, Vorteile und Einzelheiten der Erfindung werden anhand der nachfolgenden Figuren, die schematische Ausführungsbeispiele darstellen, näher erläutert.

Es zeigen:
- Fig. 1: zeigt eine schematische Schnittansicht durch einen Materialstrang, quer zu einem Massenstrom welcher aus zwei extrudierbaren Massen gebildet ist und einen leitfähigen Streifen aufweist, erzeugt durch ein Extrusionswerkzeug mit einer Steigdüse,
- Fig. 2: zeigt eine Schnittansicht durch ein Extrusionswerkzeug gemäß der Linie II - II in der Figur parallel zum Massenstrom von zwei extrudierbaren Massen im Bereich einer Steigdüse,
- Fig. 3A bis 3H: zeigen räumliche Darstellungen aus verschiedenen Perspektiven eines ersten Ausführungsbeispiels einer Steigdüse zur Herstellung eines Materialstrangs, gebildet aus zwei extrudierbaren Massen,
- Fig. 4A bis 4E: zeigen räumliche Darstellungen aus verschiedenen Perspektiven eines zweiten Ausführungsbeispiels einer Steigdüse zur Herstellung eines Materialstrangs, gebildet aus zwei unterschiedlichen extrudierbaren Massen,
- Fig. 5: zeigt eine Vorderansicht eines Extrusionswerkzeugs zur Herstellung eines Materialstrangs, gebildet aus zwei extrudierbaren Massen,
- Fig. 6: zeigt ein mit VI in der Figur 5 gekennzeichnetes Detail des Extrusionswerkzeugs zur Herstellung eines Materialstrangs,
- Fig. 7: zeigt eine Rückansicht des Extrusionswerkzeugs mit einer Steigdüse gemäß den Figuren 3A bis 3H zur Herstellung eines Materialstrangs,
- Fig. 8: zeigt einen schematischen Ausschnitt einer weiteren Rückansicht des Extrusionswerkzeugs mit einer Steigdüse gemäß den Figuren 4A bis 4E zur Herstellung eines Materialstrangs,
- Fig. 9: zeigt einen schematischen Schnitt durch den Kopfbereich eines Reifens welcher den Materialstrang gemäß Figur 1 aufweist und
- Fig. 10: zeigt eine schematische Schnittansicht eines Reifens, welcher den Materialstrang gemäß Figur 1 aufweist.

In der nachfolgenden Figurenbeschreibung beziehen sich Begriffe wie oben, unten, vorne, hinten, links, rechts und dergleichen ausschließlich auf die in den jeweiligen Figuren gewählte beispielhafte Darstellung und Position der Vorrichtung und anderer Elemente. Diese Begriffe sind nicht einschränkend zu verstehen, das heißt durch verschiedene Positionen und/oder spiegelsymmetrische Auslegung oder dergleichen können sich diese Bezüge ändern.

Gleiche Elemente erhalten in den Figuren sowie in der nachfolgenden Beschreibung gleiche Bezugszeichen.

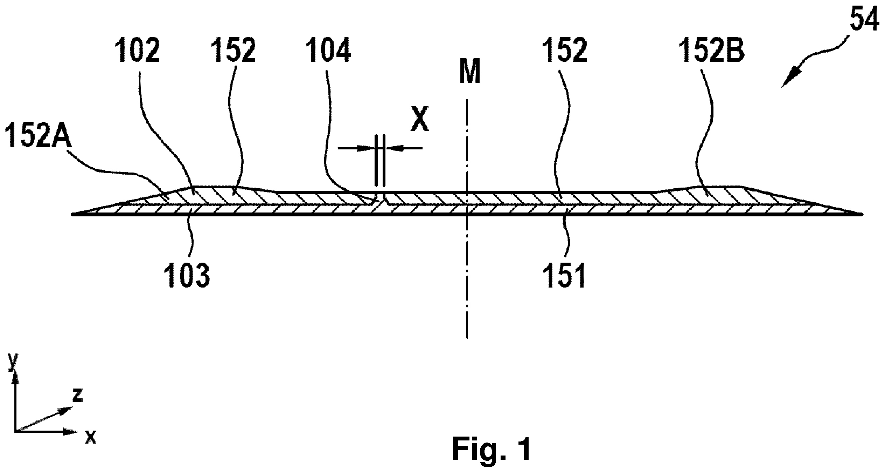

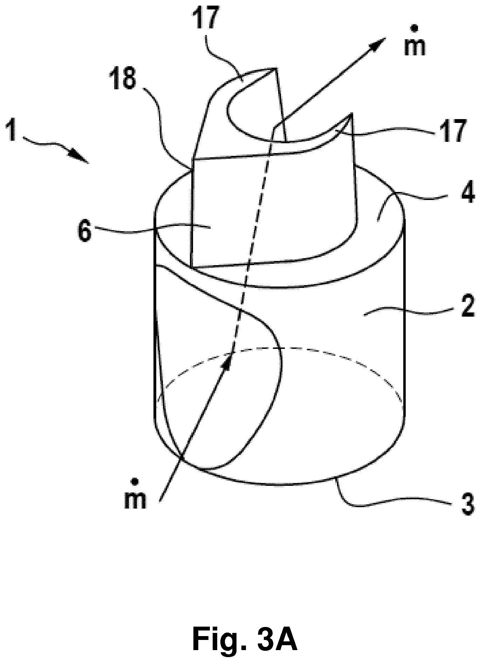

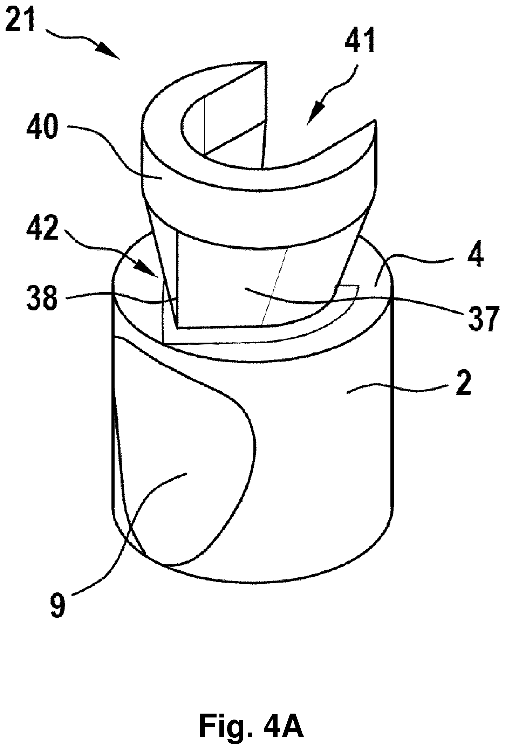

Die Figur 1 zeigt einen Schnitt quer durch einen Materialstrang 54 nach dem Verlassen eines Extrusionswerkzeuges 50. Der Materialstrang 54 wird gebildet aus einer leitfähigen extrudierbaren Masse 151 zur Bildung einer Unterplatte 103 und eines leitfähigen Streifens 104 und einer nicht oder nur gering leitfähigen extrudierbaren Masse 152 zur Bildung eines Laufstreifens 102. Der leitfähige Streifen 104 wird durch die durch eine Steigdüse 1, 21 (Figuren 3A bis 3H und 4A bis 4E) geförderte leitfähige extrudierbare Masse 151 in die nicht oder nur gering leitfähige extrudierbare Masse 152 zur Ausbildung eines Laufstreifens 102 eingebracht. Der leitfähige Streifen 104 teilt somit längs in seiner Erstreckung in z-Richtung den Laufstreifen 102 in zwei Bereiche. In z-Richtung gesehen entlang der x-Achse links, wird ein erster Bereich 152A aus nicht leitfähiger extrudierbarer Masse 152 gebildet. In z-Richtung gesehen entlang der x-Achse rechts, wird ein zweiter Bereich 152B aus nicht leitfähiger extrudierbarer Masse 152 gebildet. Unter den Bereichen 152A, 152B befindet sich ein Bereich aus leitfähiger extrudierbarer Masse 151. Zwischen den Bereichen 152A, 152B befindet sich ebenfalls ein Bereich aus leitfähiger extrudierbarer Masse 151. Zusammen bildet der aus leitfähiger extrudierbarer Masse 151 gebildete Bereich in der Schnittansicht des Materialstrangs 54 die Form eines auf dem Kopf stehenden Buchstabens T aus. Der Materialstrang 54 weist somit drei abgegrenzte Bereiche aus in ihrer Zusammensetzung voneinander abweichenden extrudierbaren Massen 151, 152 auf.

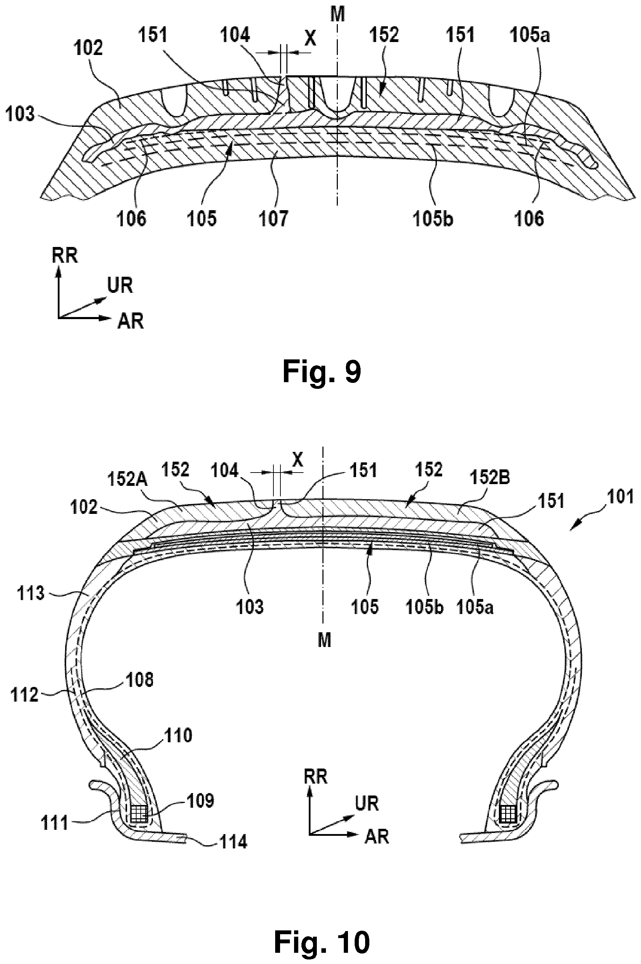

In diesem Materialstrang 54 sind zwei unterschiedliche extrudierbare Massen 151, 152 in der Form von Elastomer-Materialien vereint. Aus dem einen elektrisch leitfähigen Elastomer-Material wird eine Unterplatte 103 sowie ein aus ihr in den Laufstreifen 102 hochgezogener leitfähiger Streifen 104 erzeugt. Der leitfähige Streifen 104 dringt bis an die Oberfläche des Laufstreifens 102 vor und teilt den Laufstreifen 102 somit in zwei Bereiche. Der leitfähige Streifen 104 dient der Ableitung der im Fahrbetrieb eventuell entstehenden statischen Aufladung. Diese muss über den leitfähigen Streifen 104 abgeleitet werden, da der Laufstreifen 102 aus einem nicht oder nur gering elektrisch leitenden Elastomer-Material gefertigt wird. Die Breite des leitfähigen Streifens 104 an der Oberfläche des Laufstreifens 102 ist mit X gekennzeichnet (siehe Figuren 9 und 10).

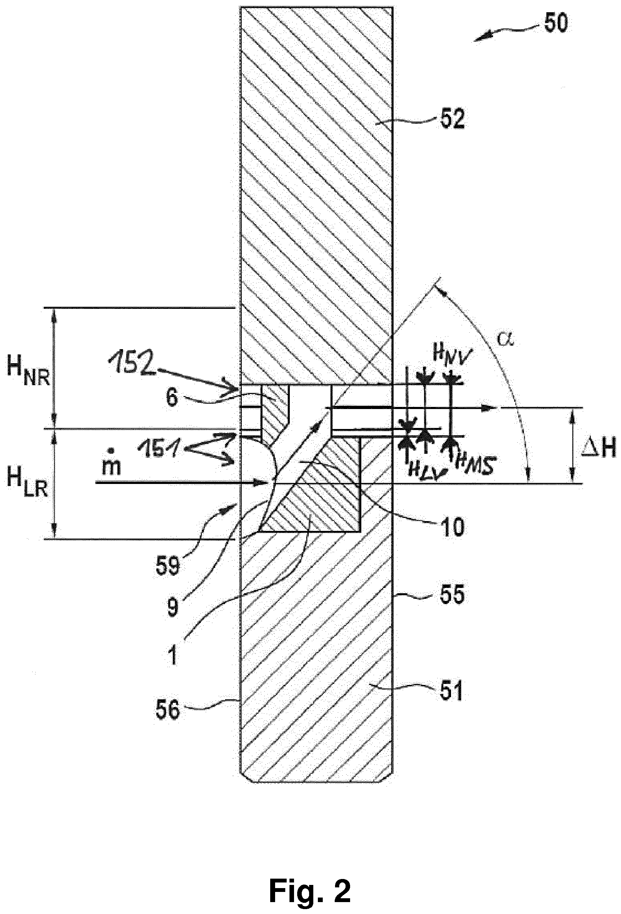

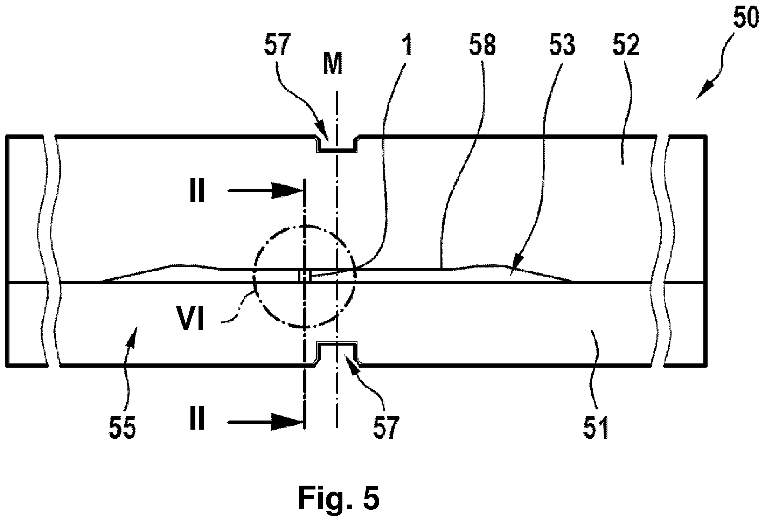

Die Figur 2 zeigt einen Schnitt entlang der Linie II - II in der Figur 5, welche eine Vorderansicht des Extrusionswerkzeuges 50 zeigt. In der Figur 2 durchströmt der Massenstrom aus zwei extrudierbaren Massen 151, 152 das Extrusionswerkzeug 50 von links nach rechts. Die beiden extrudierbaren Massen 151, 152 bilden übereinander angeordnete Schichten in dem Massenstrom aus, wobei die leitfähige extrudierbare Masse 151 die untere Schicht beziehungsweise Lage bildet und die nicht leitfähige extrudierbare Masse 152 die obere Schicht beziehungsweise Lage ausbildet. Beide extrudierbare Massen 151, 152 werden bei Durchströmen des Extrusionswerkzeugs von der Steigdüse 1 geteilt und nach dem passieren der Steigdüse 1 wieder zusammengefügt, wobei durch die Steigdüse 1 ein Streifen 104 aus nicht leitfähiger extrudierbarer Masse 151 zwischen beide Schichten extrudierbarer Massen 151, 152 eingefügt wird. Der Streifen 104 wird aus der unteren Schicht, welche aus leitfähiger extrudierbarer Masse 151 besteht, gebildet. Der Streifen 104 wird über die gesamte Höhe des Materialstrangs 54 eingefügt. Die Steigdüse 1 wird somit von einem Teilstrom des Massenstroms der leitfähigen extrudierbaren Masse 151 durchströmt, welche beim Durchfließen der Steigdüse 1 eine Änderung ihrer Höhenlage, bezogen auf den Zufluss der extrudierbaren Massen 151, 152 auf das Extrusionswerkzeug 50 erfährt. Der Teilstrom, gebildet aus leitfähiger extrudierbarer Masse 151 wird durch die Einwirkung der Steigdüse 1 hochgezogen und bildet den Streifen 104 im Materialstrang 54 aus.

Der Schnitt der Figur 2 zeigt eine Seitenansicht mit der Anordnung der Steigdüse 1 im Unterteil 51 des Extrusionswerkzeuges 50. Mit H_{NR} ist die Höhe der nicht leitfähigen extrudierbaren Masse 152 auf der Rückseite 56 des Extrusionswerkzeuges 50 zur Ausbildung des Laufstreifens 102 eingezeichnet. Mit H_{LR} ist die Höhe der leitfähigen extrudierbaren Masse 151 auf der Rückseite 56 des Extrusionswerkzeuges 50 zur Ausbildung der Unterplatte 103 und des leitfähigen Streifens 104 eingezeichnet (siehe Fig. 1). Es ist wiederum erkennbar, dass die beiden extrudierbaren Massen 151, 152 auf der Rückseite 56 des Extrusionswerkzeuges 50 eine größere Erstreckung in senkrechter Richtung aufweisen, als eine Durchtrittsöffnung 53. Mit H_{MS} ist die Höhe des Materialstrangs 54 nach dem Verlassen des Extrusionswerkzeuges 50 eingezeichnet. Sie setzt sich zusammen aus der Höhe H_{NV} der nicht leitfähigen extrudierbaren Masse 152 auf der Vorderseite 55 des Extrusionswerkzeuges 50 zur Ausbildung des Laufstreifens 102 und der Höhe H_{LV} der leitfähigen extrudierbaren Masse 151 auf der Vorderseite 55 des Extrusionswerkzeuges 50 zur Ausbildung der Unterplatte 102 und des leitfähigen Streifens 104. Mit H_{NR} ist die Höhe der nicht leitfähigen extrudierbaren Masse 152 auf der Rückseite 56 des Extrusionswerkzeuges 50 zur Ausbildung des Laufstreifens 102 eingezeichnet. Der Massenstrom m zur Bildung des Materialstrangs 54 ist mit Pfeilen dargestellt. Der Massenstrom m der leitfähigen extrudierbaren Masse 151 tritt durch eine Rückwandöffnung 59 in dem Unterteil 51 des Extrusionswerkzeuges 50 in den Düseneintritt 9 der Steigdüse 1 ein. Danach gelangt der Massenstrom m in den Fließkanal 10 der Steigdüse 1. Über eine Auslassöffnung 7 in einem Aufsatz 6 der Steigdüse 1 verlässt der Massenstrom m die Steigdüse 1 innerhalb der Durchtrittsöffnung 53 in dem Extrusionswerkzeug 50. Vereint zum Materialstrang 54 verlassen die nicht leitfähige extrudierbare Masse 152 und die leitfähige extrudierbare Masse 151 das Extrusionswerkzeug 50. Ein Fließkanal 10 wird ausgehend vom Düseneintritt 9 trichterförmig enger in Richtung der Auslassöffnung 7 der Steigdüse 1. Dies führt zu einem Druckanstieg innerhalb des Fließkanals und stellt sicher, dass genügend leitfähige extrudierbare Masse 151 die Steigdüse 1 zur Ausbildung des Materialstrangs 54 verlässt. Mit Pfeilen ist der Zufluss der leitfähigen extrudierbaren Masse 151 sowie der Zufluss der nicht leitfähigen extrudierbaren Masse 152 zur Durchtrittsöffnung 53 des Extrusionswerkzeugs 50 gezeigt. Hierbei wird deutlich, dass sich der Zufluss der leitfähigen extrudierbaren Masse 151 teilt und teilweise die Steigdüse 1 passiert und zum anderen Teil die Durchtrittsöffnung 53 passiert und hierbei den Aufsatz 6 der Steigdüse 1 umströmt.

In den Figuren 2, 3C und 4C ist der durch den Massenstrom ṁ der leitfähigen extrudierbaren Masse 151 überwundene Höhenunterschied ΔH dargestellt. Weiterhin ist in diesen Figuren (2, 3C und 4C) die durch den Massenstrom m der leitfähigen extrudierbaren Masse 151 überwundene Steigung mit dem Winkel α eingezeichnet. Somit dient die Steigdüse 1, 21 zur Überwindung eines Höhenunterschieds durch den Massenstrom m der leitfähigen extrudierbaren Masse 151. Hierdurch wird die leitfähige extrudierbare Masse 151 in die auf höherem Niveau zugeführte nicht leitfähige extrudierbare Masse 152 eingebracht. Die nicht leitfähige extrudierbare Masse 152 erhält somit einen Streifen 104 aus einer leitfähigen extrudierbaren Masse 151. Der Höhenunterschied ΔH ist die Differenz zwischen dem Niveau des vereinten Massenstroms der extrudierbaren Massen 151, 152 nach dem Verlassen der Steigdüse 1, 21 und der Mitte des Zuflusses des Düseneintritts 9 und damit der Mitte des die Steigdüse 1, 21 und damit den Fließkanal 10, 30 passierenden Massenstroms m der leitfähigen extrudierbaren Masse 151. Der Höhenunterschied ΔH bildet somit die Niveauänderung des durch die Steigdüse 1, 21 fließenden Teilstroms der leitfähigen extrudierbaren Masse 151 ab.

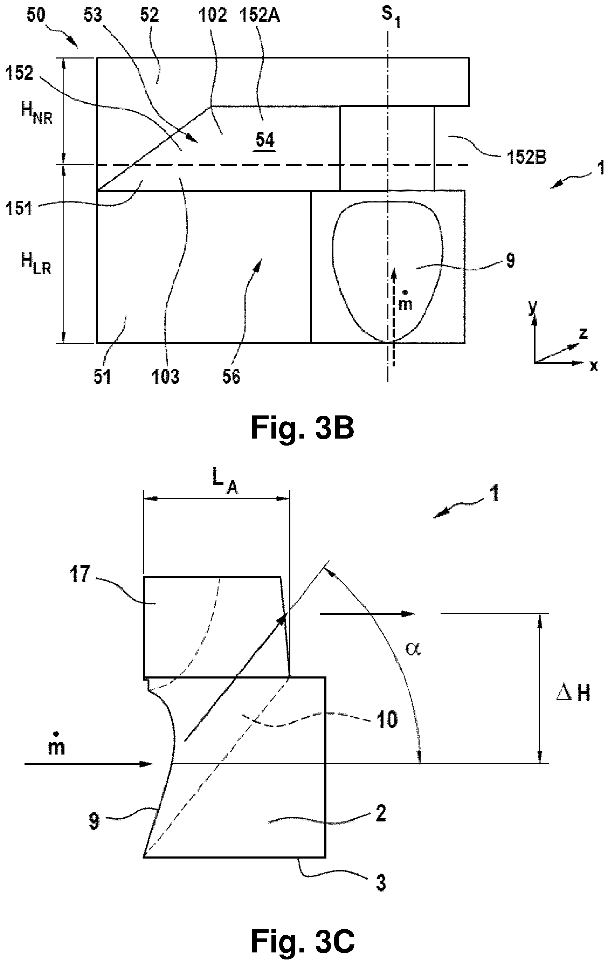

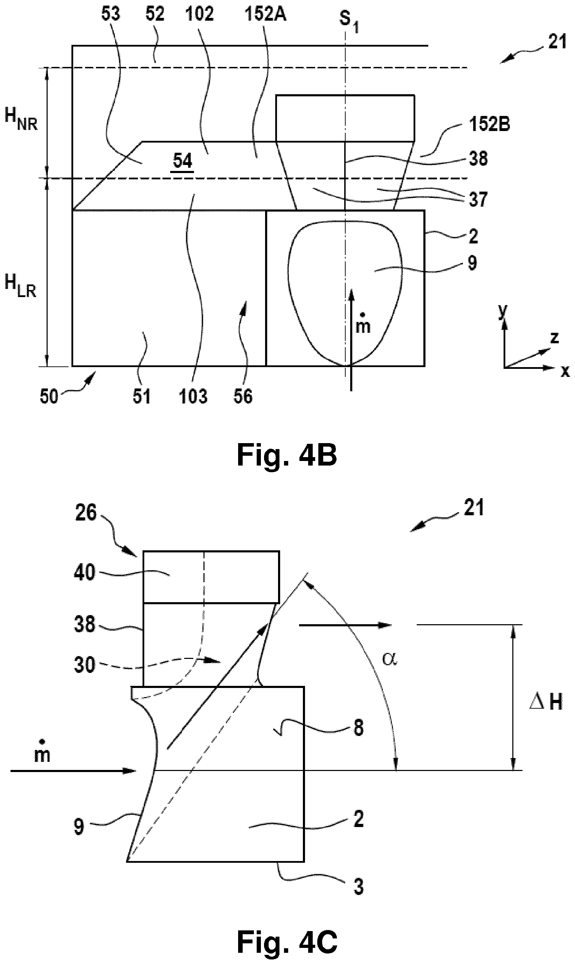

Die Figuren 3A bis 3H zeigen mehrere perspektivische Ansichten der Steigdüse 1 zur Erzeugung des leitfähigen Streifens 104 (siehe Figuren 1, 9 und 10). Zur Verdeutlichung der Anordnung der einzelnen Elemente und Bereiche der Steigdüse 1, 21 wird den Figuren 3B und 4B, welche jeweils die Rückseite der Steigdüse 1 (Fig. 3B) und der Steigdüse 21 (Fig. 4B) zeigen, ein linkshändiges kartesisches Koordinatensystem zur Seite gestellt. Wobei die x-Achse nach rechts positiv, parallel zu einer waagerechten Symmetrieachse S₂ beziehungsweise parallel zu einer waagerechten Symmetrieachse S₃, verläuft, die y-Achse nach oben, parallel zu einer senkrechten Symmetrieachse S₁, verläuft und die z-Achse positiv nach vorne in den Raum hinein verläuft.

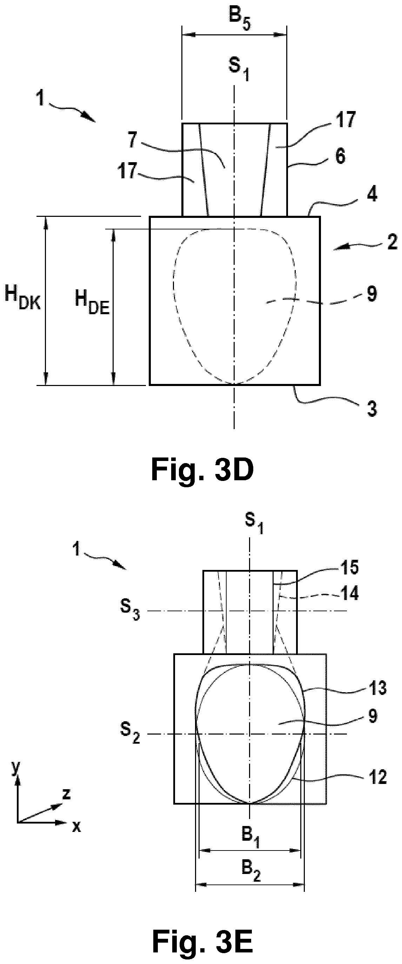

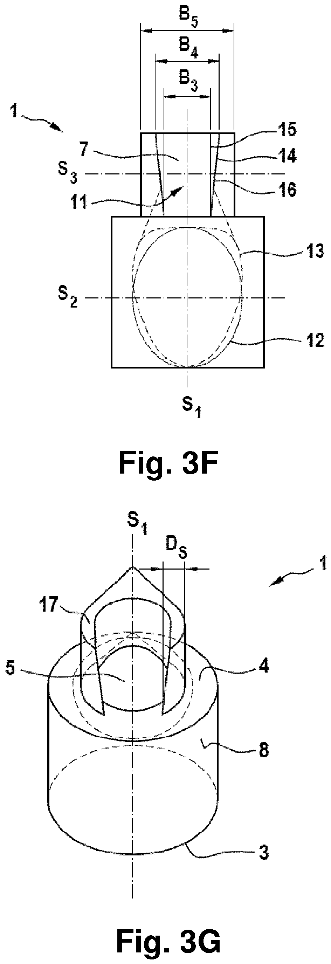

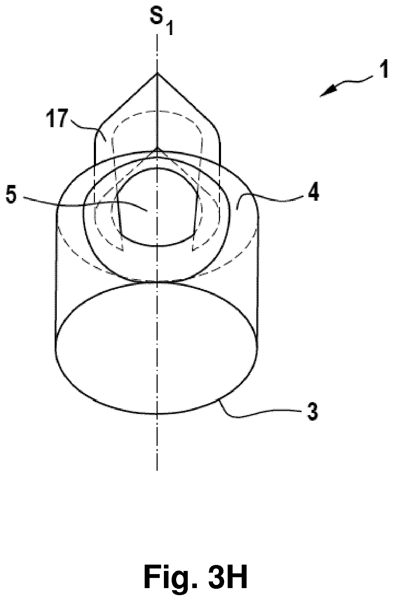

In der Figur 3A ist eine Ansicht der Steigdüse 1 auf ihre Rückseite und rechte Seite dargestellt. Die Figur 3B zeigt eine Rückansicht der Steigdüse 1 analog zu der Rückansicht des Extrusionswerkzeugs 50. Ausgehend von der Figur 3B zeigt die Figur 3C eine Ansicht der rechten Seite der Steigdüse 1. Die Figur 3D zeigt somit die Vorderansicht der Steigdüse 1. Die Figur 3E zeigt wiederum eine Rückansicht der Steigdüse 1. Die Figur 3F stellt eine Vorderansicht der Steigdüse 1 dar. In der Figur 3G ist die Steigdüse von schräg oben vorne gezeigt. Die Rückseite der zur Vorderseite geneigten Steigdüse 1 ist in der Figur 3H gezeigt. In Flussrichtung des Massenstroms der extrudierbaren Massen 151, 152 blickt der Betrachter auf die Rückseite der Steigdüse 1 analog zur Rückseite des Extrusionswerkzeugs 50, somit befindet sich rechter Hand die rechte Seite der Steigdüse 1 und dementsprechend linker Hand die linke Seite der Steigdüse 1.

Die Steigdüse 1 fügt in einen Laufstreifen 102, gebildet aus einer nicht leitfähigen extrudierbaren Masse 152, den leitfähigen Streifen 104, gebildet aus einer gut elektrisch leitenden extrudierbaren Masse 151, ein. Dieser schmale leitfähige Streifen 104 reicht von der Profiloberseite bis zur Profilunterseite des Laufstreifens 102 und leitet die elektrische Aufladung des Fahrzeugluftreifens zuverlässig ab (siehe Figuren 1, 9 und 10).

Die Steigdüse 1 weist einen zylinderförmigen Düsenkörper 2 auf, welcher an seiner kreisförmig ausgebildeten Unterseite 3 verschlossen ist. An seiner ebenfalls kreisförmig ausgebildeten Oberseite 4 weist der Düsenkörper 2 einen Düsenaustritt 5 auf (siehe Figur 3G, Vorderansicht). Der Düsenaustritt 5 mündet in einem Aufsatz 6, welcher seinerseits eine Auslassöffnung 7 aufweist. Der Aufsatz 6 sowie der Düsenkörper 2 sind symmetrisch zu der mittleren senkrechten Symmetrieachse S₁ aufgebaut. Weiterhin weist der Düsenkörper 2 eine Mantelfläche 8 auf. Die Mantelfläche 8 weist einen Düseneintritt 9 auf. Zwischen dem Düseneintritt 9 und den Düsenaustritt 5 ist ein Fließkanal 10 für eine leitfähige extrudierbare Masse 151 ausgebildet. Der Fließkanal 10 mündet in die Auslassöffnung 7 des Aufsatzes 6. Über die Auslassöffnung 7 verlässt die leitfähige extrudierbare Masse 151 die Steigdüse 1 und passiert hierbei einen Formungsbereich 11 (siehe Figur 3F). Der Formungsbereich 11 erzeugt die spätere Kontur des leitfähigen Streifens 104. Der Weg der leitfähigen extrudierbaren Masse 151 durch die Steigdüse 1 ist mit Pfeilen gekennzeichnet, die das Bezugszeichen m aufweisen. Mit m ist somit der Massenstrom der leitfähigen extrudierbaren Masse 151 durch die Steigdüse 1 gekennzeichnet. Der Massenstrom m der leitfähigen extrudierbaren Masse 151 ist die Menge der leitfähigen extrudierbaren Masse 151 in kg welche pro Zeiteinheit, angegeben in Sekunden, die Steigdüse 1 passiert. Der Massenstrom m der leitfähigen extrudierbaren Masse 151 wird somit in kg/s angegeben. Der Düseneintritt 9 weist bei einer Projektion in eine zweidimensionale Ebene eine eiförmige Außenkontur auf, welche symmetrisch zur senkrechten Symmetrieachse S₁ ausgebildet ist. Diese Symmetrieachse S₁ verläuft parallel zu der y-Achse des Koordinatensystems und somit nahezu parallel zu dem durch die Steigdüse 1 aufsteigenden Massenstrom m der leitfähigen extrudierbaren Masse (siehe Figur 3B).

Die Figur 3A zeigt den Massenstrom m der leitfähigen extrudierbaren Masse 151 beim passieren der Steigdüse 1. Deutlich ist zu erkennen, dass der Massenstrom m der leitfähigen extrudierbaren Masse 151 eine Änderung seiner Höhenlage beim Durchströmen der Steigdüse 1 erfährt. Der Massenstrom m der leitfähigen extrudierbaren Masse 151 strömt in den Düsenkörper 2 unterhalb des Aufsatzes 6 und verlässt den Aufsatz 6 oberhalb des Düsenkörpers 2, er erfährt somit eine Änderung seiner Höhenlage.

In der Figur 3B ist schematisch das Extrusionswerkzeug 50 dargestellt, welches ein Unterteil 51 und ein Oberteil 52 aufweist. Zwischen Unterteil 51 und Oberteil 52 ist eine Durchtrittsöffnung 53 für extrudierbare Massen 151, 152 ausgebildet. Durch diese Durchtrittsöffnung 53 strömen mindestens zwei unterschiedliche extrudierbare Massen 151, 152 und bilden einen Materialstrang 54 aus. Der Materialstrang 54 wird gebildet aus einer leitfähigen extrudierbaren Masse 151 zur Bildung einer Unterplatte 103 und eines leitfähigen Streifens 104 und einer nicht oder nur gering leitfähigen extrudierbaren Masse 152 zur Bildung eines Laufstreifens 102. Der leitfähige Streifen 104 (siehe Figur 1) wird durch die durch die Steigdüse 1 geförderte leitfähige extrudierbare Masse 151 in die nicht oder nur gering leitfähige extrudierbare Masse 152 zur Ausbildung eines Laufstreifens 102 eingebracht. Der leitfähige Streifen 104 teilt somit in z-Richtung den Laufstreifen 102 in zwei Bereiche. Der Materialstrang 54 weist daher drei abgegrenzte Bereiche aus in ihrer Zusammensetzung voneinander abweichenden extrudierbaren Massen 151, 152 auf. Die Figur 3B zeigt eine Rückseite 56 des Extrusionswerkzeuges 50. Mit H_{NR} ist die Höhe der nicht leitfähigen extrudierbaren Masse 152 auf der Rückseite 56 des Extrusionswerkzeuges 50 zur Ausbildung des Laufstreifens 102 eingezeichnet. Mit H_{LR} ist die Höhe der leitfähigen extrudierbaren Masse 151 auf der Rückseite 56 des Extrusionswerkzeuges 50 zur Ausbildung der Unterplatte 102 und des leitfähigen Streifens 104 eingezeichnet. Es ist deutlich erkennbar, dass die beiden extrudierbaren Massen 151, 152 auf der Rückseite 56 des Extrusionswerkzeuges 50 eine größere Erstreckung in y-Richtung aufweisen, als die Durchtrittsöffnung 53. Hierdurch entsteht auf der Rückseite 65 des Extrusionswerkzeuges 50 ein Staudruck beider extrudierbaren Massen 151, 152. Da die Höhe H_{LR} der leitfähigen extrudierbaren Masse 151 auf der Rückseite 56 des Extrusionswerkzeuges 50 größer ist, als die Höhe H_{NR} der nicht leitfähigen extrudierbaren Masse 152 auf der Rückseite 56 des Extrusionswerkzeuges 50 erzeugt die leitfähige extrudierbare Masse 151 einen größeren Druck, welcher zum Einbringen des mindestens einen leitfähigen Streifens 104 in den Laufstreifen 102 genutzt wird. Daraus ergibt sich, dass die Höhe H_{DE} des Düseneintritts 9 sich nahezu auf die gesamte Höhe H_{DK} des Düsenkörpers 2 erstreckt (siehe Figur 3D). Somit kann nahezu auf der gesamten Höhe H_{DK} des Düsenkörpers 2 leitfähige extrudierbare Masse 151 in die Steigdüse 1 strömen.

Die Figur 3C zeigt die rechte Seite der Steigdüse 1 dort ist erkennbar, dass in der Seitenansicht der Düseneintritt 9 eine sichelförmige Kontur aufweist. Der Fließkanal 10 ist in dieser Figur durch unterbrochene Linien dargestellt.

Die Figur 3D zeigt die Breite B₅ des Aufsatzes 6. Diese Breite B₅ des Aufsatzes 6 bestimmt die Breite X (siehe Figuren 1, 9 und 10) des leitfähigen Streifens 104 im Materialstrang 54. Zur Ausbildung des Materialstrangs 54 müssen die nicht leitfähige extrudierbare Masse 152 und die leitfähige extrudierbare Masse 151 circa 6 bis 8 mm Strecke in z-Richtung zurücklegen, bezogen auf die Figur 3B. Der Aufsatz 6 wird aus zwei Stegen 17 gebildet welche im spitzen Winkel aufeinander zulaufen und eine senkrechte Kante 18 zur Teilung der extrudierbaren Massen 151, 152 aufweisen. Jeder Steg 17 weist eine Dicke Ds auf, siehe Figur 3G. Die Dicke Ds des jeweiligen Stegs 17 muss durch die extrudierbaren Massen 151, 152 in z-Richtung des Massenstroms m der extrudierbaren Massen 151, 152 kompensiert werden, zur Ausbildung des Materialstrangs 54.

Der Aufsatz 6 weist in Richtung des Massenstroms m des Materialstrangs 54 eine Länge L_{A} auf, siehe rechte Seitenansicht der Steigdüse 1 in der Figur 3C.

Zur Verdeutlichung der Formgebung des Düseneintritts 9 ist in den Figuren 3E und 3F neben der senkrechten Symmetrieachse S₁ eine waagerechte Symmetrieachse S₂ eingezeichnet. Weiterhin ist eine Ellipse 12 eingezeichnet, zur Erläuterung der Einlasskontur 13 des Düseneintritts 9. Die Ellipse 12 weist eine senkrechte Symmetrieachse S₁ auf, welche sie mit der Einlasskontur 13 des Düseneintritts 9 teilt und weist eine waagerechte Symmetrieachse S₂ auf. Die größere Erstreckung weist die Ellipse 12 sowie die Einlasskontur 13 entlang der senkrechten Symmetrieachse S₁ auf, sie wird auch als Höhe bezeichnet und erstreckt sich in y-Richtung. Die geringere Erstreckung weist die Ellipse 12 sowie die Einlasskontur 13 entlang der waagerechten Symmetrieachse S₂ auf, sie wird auch als Breite bezeichnet und erstreckt sich in x-Richtung. Die Ellipse 12 ist symmetrisch zu der senkrechten Symmetrieachse S₁ und zu der waagerechten Symmetrieachse S₂ ausgebildet, die Einlasskontur 13 ist lediglich symmetrisch zu der senkrechten Symmetrieachse S₁ ausgebildet. Die Einlasskontur 13 weist die Außenkontur eines Hühnereis auf, welches auf seiner schmalen Spitze steht. Die Einlasskontur 13 kann somit auch als Eilinie bezeichnet werden. Unterhalb der waagerechten Symmetrieachse S₂ liegt die Einlasskontur 13 innerhalb beziehungsweise unter der Ellipse 12. Mit B₁ ist die Breite der Einlasskontur 13 unterhalb der waagerechten Symmetrieachse S₂ bezeichnet. Oberhalb der waagerechten Symmetrieachse S₂ liegt die Einlasskontur 13 außerhalb der Ellipse 12 beziehungsweise oberhalb der Ellipse 12. Mit B₂ ist die Breite der Einlasskontur 13 oberhalb der waagerechten Symmetrieachse S₂ bezeichnet. Daraus ergibt sich, dass die Breite B₂ einen größeren Wert als die Breite B₁ aufweist (B₂ > B₁). Die Einlasskontur 13 bildet somit eine "Ellipse" mit kleinerer Halbachse, sie ist also flacher als die dargestellte Ellipse 12.

Eine Auslasskontur 16 der Auslassöffnung 7 und damit auch des Formungsbereichs 11 der Steigdüse 1 weisen im Wesentlichen die Form eines Trapezes 14 auf. Zur Verdeutlichung ist in das Trapez 14 ein Rechteck 15 eingezeichnet worden. Das Trapez 14 sowie das Rechteck 15 erfahren ihre größte Erstreckung entlang der senkrechten Symmetrieachse S₁ und somit parallel zur y-Achse. Zur senkrechten Symmetrieachse S₁ ist sowohl das Trapez 14 als auch das Rechteckt 15 symmetrisch ausgebildet. Zu einer waagerechten Symmetrieachse S₃ ist lediglich das Rechteck 15 symmetrisch ausgebildet. Unterhalb der waagerechten Symmetrieachse S₃ liegt die Auslasskontur 16 näher an dem Rechteck 15 als oberhalb der waagerechten Symmetrieachse S₃. Mit B₃ ist die Breite der Auslasskontur 16 unterhalb der waagerechten Symmetrieachse S₃ bezeichnet. Oberhalb der waagerechten Symmetrieachse S₃ liegt die Auslasskontur 16 weiter entfernt von dem Rechteck 15 als unterhalb der waagerechten Symmetrieachse S₃. Mit B₄ ist die Breite der Auslasskontur 16 oberhalb der waagerechten Symmetrieachse S₃ bezeichnet. Daraus ergibt sich, dass die Breite B₄ einen größeren Wert als die Breite B₃ aufweist (B₄ > B₃). Die Auslasskontur 16 bildet ein gleichschenkliges oder symmetrisches Trapez 14 aus, da ihre nicht parallelen Seiten gleich lang sind.

Somit kann oberhalb der waagerechten Symmetrieachse S₂ mehr leitfähige extrudierbare Masse 151 in den Fließkanal 10 der Steigdüse 1 eintreten, als unterhalb der waagerechten Symmetrieachse S₂. Oberhalb der waagerechten Symmetrieachse S₃ kann mehr leitfähige extrudierbare Masse 151 den Fließkanal 10 der Steigdüse 1 verlassen, als unterhalb der waagerechten Symmetrieachse S₃. Der Fließkanal 10 ist strömungsoptimiert und weist den gleichen oder einen geringeren Druckverlust wie die übrigen Bereiche zur Zuführung der leitfähigen extrudierbaren Masse 151 zur Bildung einer Unterplatte 103 auf.

Die Figur 3E zeigt die Sicht auf die Rückseite der Steigdüse 1, welche den Düseneintritt 9 für die leitfähige extrudierbare Masse 151 aufweist.

Die Figur 3F zeigt die Sicht auf die Vorderseite der Steigdüse 1, welche die Auslassöffnung 7 für die leitfähige extrudierbare Masse 151 aufweist. Die Auslassöffnung 7 liegt somit auf der gegenüberliegenden Seite des Düseneintritts 9, in der jeweiligen Figur sind die jeweils verdeckten Öffnungen mit ihren Umrissen angedeutet um die Lage der Öffnungen zueinander aufzuzeigen.

Die Figur 3G zeigt die Dicke Ds des Stegs 17. Diese Dicke muss durch den aus den extrudierbaren Massen 151, 152 bestehenden vorbeiströmenden Materialstrom überwunden werden, um einen Materialstrang 54 auszubilden.

Die Figur 3H zeigt eine Ansicht der Steigdüse 1 von schräg unten. Dies ermöglicht den Blick entlang des Fließkanals 10. Ausgehend von dem Düseneintritt 9 ist der Düsenaustritt 5 erkennbar. Somit ist der Fließweg des Massenstroms m, gebildet aus leitfähiger extrudierbarer Masse 151 durch den Düsenkörper 2 der Steigdüse 1 nachvollziehbar. Sichtbar ist die geschlossene, kreisrunde Unterseite des Düsenkörpers 2 der Steigdüse 1.

Die Figuren 4A bis 4E zeigen mehrere perspektivische Ansichten einer weiteren Steigdüse 21 zur Erzeugung eines leitfähigen Streifens 104 (siehe Figuren 1, 9 und 10). Zur Verdeutlichung der Anordnung der einzelnen Elemente und Bereiche der Steigdüse 21 wird der Figur 4B wiederum ein linkshändiges kartesisches Koordinatensystem zur Seite gestellt.

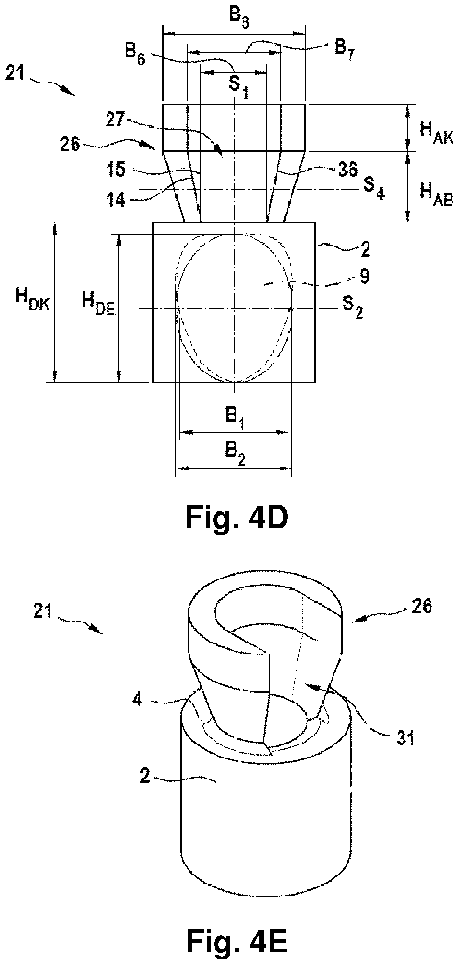

In der Figur 4A ist eine Ansicht der Steigdüse 21 auf ihre Rückseite und rechte Seite dargestellt. Die Figur 4B zeigt eine Rückansicht der Steigdüse 21 analog zu der Rückansicht des Extrusionswerkzeugs 50. Ausgehend von dieser Figur 4B zeigt die Figur 4C eine Ansicht der rechten Seite der Steigdüse 21. Die Figur 4D zeigt somit die Vorderansicht der Steigdüse 21. Die Figur 4E zeigt wiederum eine Rückansicht der Steigdüse 21. In Flussrichtung des Massenstroms der extrudierbaren Massen 151, 152 blickt der Betrachter auf die Rückseite der Steigdüse 21 analog zur Rückseite des Extrusionswerkzeugs 50, somit befindet sich rechter Hand die rechte Seite der Steigdüse 21 und dementsprechend linker Hand die linke Seite der Steigdüse 21.

Nachfolgend werden lediglich die Unterschiede zwischen der in den Figuren 3A bis 3H gezeigten Steigdüse 1 und der in den Figuren 4A bis 4E gezeigten Steigdüse 21 beschrieben. Die Steigdüse 21 weist einen Aufsatz 26 auf, welcher in seiner geometrischen Gestalt von dem Aufsatz 6 der Steigdüse 1 abweichend ausgeführt ist. Ein Fließkanal 30 verbindet den Düseneintritt 9 welcher sich in der Mantelfläche 8 des Düsenkörpers 2 befindet mit einer Auslassöffnung 27 in dem Aufsatz 26. Eine Auslasskontur 36 bildet zusammen mit der Auslassöffnung 27 einen Formungsbereich 31 für die leitfähige extrudierbare Masse 151. Im oberen Bereich weist der Aufsatz 26 einen kreisförmigen Aufsatzkragen 40 mit einer bei der Draufsicht U-förmigen Ausnehmung 41 auf. Zwischen dem Ausatzkragen 40 und dem Düsenkörper 2 befindet sich ein vom Aufsatzkragen 40 zum Düsenkörper 2 verjüngte Aufsatzbereich 42. Zur Seite der Düsenöffnung 9 hin bildet dieser verjüngte Aufsatzbereich 42 eine Kante 38 aus, welche die Gestalt eines Vordersteven eines Schiffsrumpfes annimmt. Diese Kante 38 dient zum Teilen des Massenstroms m, gebildet aus extrudierbarer Masse 151, 152. Die Kante 38 bildet den Abschluss zweier im spitzen Winkel aufeinandertreffender Stege 37.

Die Figur 4A zeigt eine perspektivische Ansicht auf die Rückseite und rechte Seite der Steigdüse 21. Besonders gut ist der verjüngte Aufsatzbereich 42 erkennbar. Er dient zum Teilen des Massenstroms m, gebildet aus extrudierbarer Masse 151, 152 und späteren vereinen des Massenstroms m zu einem Materialstrang 54 aufweisend einen leitfähigen Streifen 104.

Die Figur 4B stellt eine Rückansicht der Steigdüse 21 dar und zeigt, dass der Aufsatzkragen 40 der Steigdüse 21 in das Oberteil 52 des schematisch dargestellten Extrusionswerkzeugs 50 aufgenommen ist. Lediglich der verjüngte Aufsatzbereich 42 befindet sich im Bereich der Durchtrittsöffnung 53 des Extruderwerkzeuges 50.

Die Figur 4C ist eine Sicht auf die rechte Seite der Steigdüse 21 hier wird gezeigt, dass ein Teilstrom des Massenstroms m, gebildet aus leitfähiger extrudierbarer Masse 151 beim Durchströmen des Fließkanals 30 eine Änderung seiner Höhenlage erfährt. Der Teilstrom des Massenstroms m, gebildet aus leitfähiger extrudierbarer Masse 151 strömt unterhalb der im Extrusionswerkzeug 50 ausgebildeten Durchtrittsöffnung 53 auf das Extrusionswerkzeug 50 zu und wird beim Durchströmen des Fließkanals 30 der Steigdüse 21 auf das Niveau der Durchtrittsöffnung 53 angehoben und passiert zusammen mit den extrudierbaren Massen 151, 152 die Durchtrittsöffnung 53 zur Ausbildung eines Materialstrangs 54.

In der Figur 4D, eine Vorderansicht der Steigdüse 21, ist ersichtlich, dass eine Auslasskontur 36 der Auslassöffnung 27 und damit auch des Formungsbereichs 31 der Steigdüse 21 im Aufsatzbereich 42 unterhalb des Aufsatzkragens 40 im Wesentlichen die Form eines Trapezes 14 aufweisen. Zur Verdeutlichung ist in das Trapez 14 ein Rechteck 15 eingezeichnet worden. Das Trapez 14 sowie das Rechteck 15 erfahren ihre größte Erstreckung entlang der senkrechten Symmetrieachse S₁ und somit parallel zur y-Achse. Zur senkrechten Symmetrieachse S₁ ist sowohl das Trapez 14 als auch das Rechteckt 15 symmetrisch ausgebildet. Zu einer waagerechten Symmetrieachse S₄ ist lediglich das Rechteck 15 symmetrisch ausgebildet. Unterhalb der waagerechten Symmetrieachse S₄ liegt die Auslasskontur 36 näher an dem Rechteck 15 als oberhalb der waagerechten Symmetrieachse S₄. Mit B₆ ist die Breite der Auslasskontur 36 unterhalb der waagerechten Symmetrieachse S₄ bezeichnet. Oberhalb der waagerechten Symmetrieachse S₄ liegt die Auslasskontur 36 weiter entfernt von dem Rechteck 15 als unterhalb der waagerechten Symmetrieachse S₄. Mit B₇ ist die Breite der Auslasskontur 36 oberhalb der waagerechten Symmetrieachse S₄ bezeichnet. Daraus ergibt sich, dass die Breite B₇ eine größere Erstreckung als die Breite B₆ aufweist (B₇ > B₆). Die Auslasskontur 36 bildet im verjüngten Aufsatzbereich 42 ein gleichschenkliges oder symmetrisches Trapez 14 aus, da ihre nicht parallelen Seiten gleich lang sind.

Somit kann oberhalb der waagerechten Symmetrieachse S₂ mehr leitfähige extrudierbare Masse 151 in den Fließkanal 30 der Steigdüse 21 eintreten, als unterhalb der waagerechten Symmetrieachse S₂. Oberhalb der waagerechten Symmetrieachse S₄ kann mehr leitfähige extrudierbare Masse 151 den Fließkanal 30 der Steigdüse 21 verlassen, als unterhalb der waagerechten Symmetrieachse S₄. Der Fließkanal 30 ist strömungsoptimiert und weist den gleichen oder einen geringeren Druckverlust wie die übrigen Bereiche zur Zuführung der leitfähigen extrudierbaren Masse 151 zur Bildung einer Unterplatte 103 auf.

Mit H_{AK} ist die Höhe des Aufsatzkragens 40 eingezeichnet. H_{AB} gibt die Höhe des Aufsatzbereichs 42 wieder. In diesem Ausführungsbeispiel der Steigdüse 21 entspricht die Höhe H_{AK} des Aufsatzkragens 40 circa ein Drittel der Gesamthöhe (H_{AK} + H_{AB}) des Aufsatzes 26 der Steigdüse 21.

Die Figur 4E zeigt eine perspektivische Ansicht auf die Vorderseite und die rechte Seite der Steigdüse 21. Gut zu erkennen ist der Formungsbereich 31 zur Konturierung der die Steigdüse 21 verlassenden leitfähigen extrudierbaren Masse 151.

Die Figur 5 zeigt eine Vorderseite 55 des Extrusionswerkzeugs 50, welches aus dem Unterteil 51 und dem Oberteil 52 besteht und zwischen den Teilen 51, 52 eine Durchtrittsöffnung 53 ausbildet. Das Extrusionswerkzeug 50 wird auch als Vorleiste bezeichnet. Das Extrusionswerkzeug 50 wird in einen Vorleistenhalter an einem Extruder eingesetzt. Zur Positionierung des Extrusionswerkzeuges 50 am Vorleistenhalter weist das Extrusionswerkzeug 50 am Unterteil 51 und am Oberteil 52 je eine Zentrierung 57 auf. In diese beispielsweise als Aussparung ausgeführte Zentrierung 57 greift ein korrespondierendes Element am Vorleistenhalter spielfrei oder nahezu spielfrei ein. Der Materialstrom m des Materialstrangs 54 tritt in der Figur 5 aus der Ebene hinaus und bewegt sich auf den Betrachter zu. Durch die Durchtrittsöffnung 53 ist die Steigdüse 1 zu erkennen, welche außermittig im Massenstrom m des Materialstrangs 54 angeordnet ist. Die Steigdüse 1 kann beliebig auf der gesamten Breite der Durchtrittsöffnung 53 angeordnet werden. Auch können mehrere Steigdüsen 1 zur Ausbildung von leitfähigen Streifen 104 auf der Rückseite 56 des Extrusionswerkzeuges 50 angeordnet werden. Das Oberteil 52 bildet zusammen mit dem Unterteil 51 eine Durchtrittskontur 58 für den Materialstrang 54 aus.

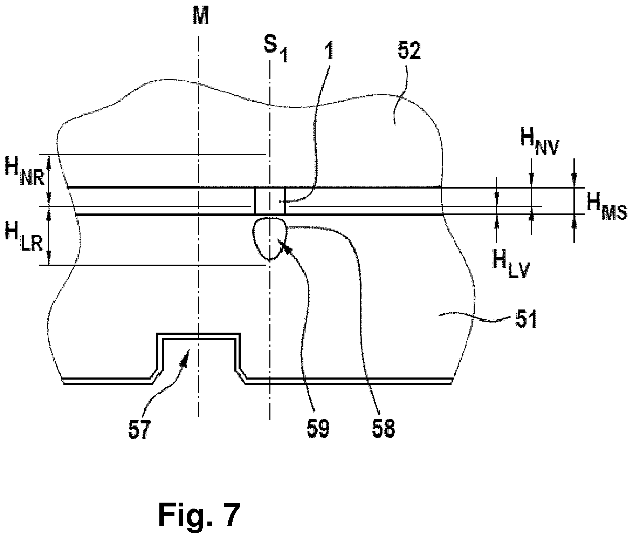

Mit M ist in den Figuren 5 und 7 die Mittelinie und damit die Mitte des Extrusionswerkzeuges 50 eingezeichnet. Die Mittellinie M durchtritt dementsprechend mittig die Zentrierungen 57 an dem Extrusionswerkzeug 50.

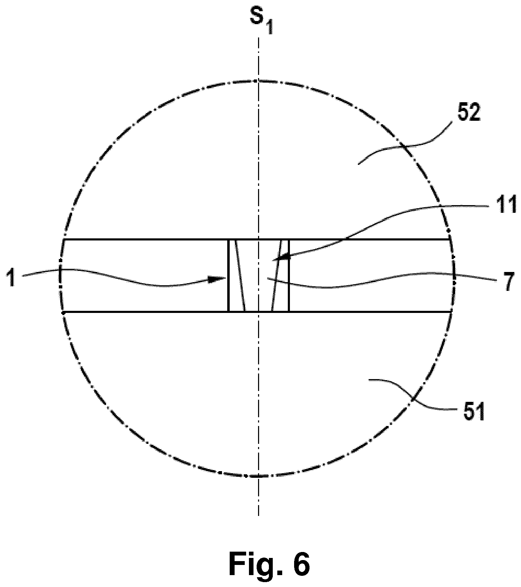

Die Figur 6 zeigt ein mit VI gekennzeichnetes Detail aus der Figur 5, und somit einen Ausschnitt der Vorderansicht des Extrusionswerkzeugs 50. Hier ist deutlich die Positionierung der Steigdüse 1 auf der Rückseite 56 des Extrusionswerkzeuges 50 zu erkennen. Das Extrusionswerkzeug 50 wird auch als Strangpresswerkzeug bezeichnet, da es zur Ausbildung des Materialstrangs 54 dient.

Die Figur 7 zeigt einen Ausschnitt der Rückseite des Extrusionswerkzeuges 50 gemäß der Figur 5, welches eine Steigdüse 1 gemäß den Figuren 3A bis 3G aufweist.

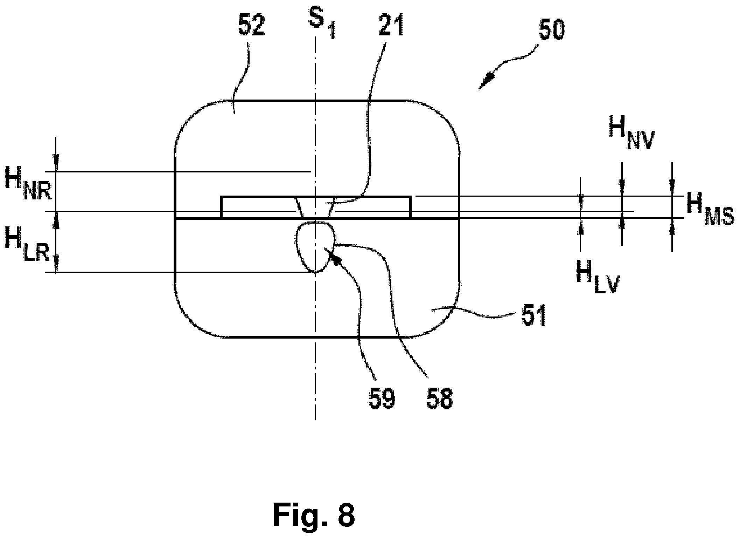

Die Figur 8 wiederum zeigt einen schematischen Ausschnitt der Rückseite eines Extrusionswerkzeuges 50 gemäß der Figur 5, welches eine Steigdüse 21 gemäß den Figuren 4A bis 4E aufweist.

Die Figuren 7 und 8 zeigen somit jeweils einen Ausschnitt der Rückseite 56 des Extrusionswerkzeuges 50 gemäß Figur 5, jedoch mit unterschiedlichen Steigdüsen 1, 21. Mit H_{MS} ist die Höhe des Materialstrangs 54 nach dem Verlassen des Extrusionswerkzeuges 50 eingezeichnet. Sie setzt sich zusammen aus der Höhe H_{NV} der nicht leitfähigen extrudierbaren Masse 152 auf der Vorderseite 55 des Extrusionswerkzeuges 50 zur Ausbildung des Laufstreifens 102 und der Höhe H_{LV} der leitfähigen extrudierbaren Masse 151 auf der Vorderseite 55 des Extrusionswerkzeuges 50 zur Ausbildung der Unterplatte 102 und des leitfähigen Streifens 104. Mit H_{NR} ist die Höhe der nicht leitfähigen extrudierbaren Masse 152 auf der Rückseite 56 des Extrusionswerkzeuges 50 zur Ausbildung des Laufstreifens 102 eingezeichnet. Mit H_{LR} ist die Höhe der leitfähigen extrudierbaren Masse 151 auf der Rückseite 56 des Extrusionswerkzeuges 50 zur Ausbildung der Unterplatte 102 und des leitfähigen Streifens 104 eingezeichnet. Es ist wiederum erkennbar, dass die beiden extrudierbaren Massen 151, 152 auf der Rückseite 56 des Extrusionswerkzeuges 50 eine größere Erstreckung aufweisen, als die Durchtrittsöffnung 53.Weiterhin ist die Rückwandöffnung 59 auf der Rückseite 56 des Extrusionswerkzeuges 50 erkennbar, sie dient zur Aufnahme von leitfähiger extrudierbarer Masse 151 aus dem Massenstrom m. Die Rückwandöffnung 59 wird von einer Durchtrittskontur 58 gebildet. Hinter der Rückwandöffnung 59 ist der Düseneintritt 9 der Steigdüse 1 beziehungsweise der Steigdüse 21 angeordnet. Bei neuer Positionierung der Steigdüse 1 beziehungsweise Steigdüse 21 innerhalb der Ausdehnung der Durchtrittsöffnung 53 kann die Rückwandöffnung 59 an dieser Stelle beispielsweise durch Schweißen verschlossen werden und an einer anderen Stelle eine neue Rückwandöffnung 59 geschaffen werden.

Die Steigdüse 1 grenzt an das Oberteil 52 des Extrusionswerkzeuges 50, wo hingegen der Aufsatzkragen 40 der Steigdüse 21 in das Oberteil 52 des Extrusionswerkzeuges 50 aufgenommen ist. Somit ist die Steigdüse 21 in Unterteil 51 und Oberteil 52 des Extrusionswerkzeuges 50 festgelegt. In dem Unterteil 51 sowie in dem Oberteil 52 kann gegenüberliegend eine Aufnahme für die Steigdüse 21 vorgesehen sein.

Das Extrusionswerkzeug 50 ist geschaffen zum Einsatz mit Extrudern, ausgeführt beispielsweise als Mehrfach-Extrusionsaggregate in zum Beispiel Hammer- oder Klammerkopf-Ausführung. Die Mehrfachextrusion dient zur Herstellung von Ultra-high Performance- (UHP) oder Maximum-Performance-Reifen.

Zur Verdeutlichung der Lage der einzelnen beschriebenen Elemente in den nachfolgenden Figuren 9 und 10 wird ein linkshändiges kartesisches Koordinatensystem zu Grunde gelegt und jeweils benachbart zu den Figuren abgebildet. Bei diesem Koordinatensystem verlaufen die Koordinatenlinien einer Dimension parallel zueinander und weisen einen konstanten Abstand zueinander auf. Die x-Achse oder Abszisse des kartesischen Koordinatensystems stellt die axiale Richtung AR dar. Die y-Achse oder Ordinate des kartesischen Koordinatensystems stellt die radiale Richtung RR dar. Die z-Achse oder Applikante des kartesischen Koordinatensystems verläuft bei diesem linkshändigen Koordinatensystem in der Abbildung in den Raum hinein und stellt die Umfangsrichtung UR beziehungsweise Drehrichtung eines Reifens dar. Der Reifen rotiert im Betrieb um eine Achse, welche parallel zu der Axialen Richtung AR orientiert ist. Die Rotation des Reifens kann in den Raum hinein oder entgegengesetzt erfolgen. Die Rotation des Reifens erfolgt um eine im Zentrum des Reifens angeordnete, beim unbelasteten Reifen am Punkt des halben Durchmessers angeordnete Achse. Weiterhin weist der Reifen eine Mittelinie M auf, welche den Querschnitt halbiert und somit einen Teilquerschnitt eines um die Mittelinie M spiegelsymmetrischen Rotationskörpers ausbildet. Im Bereich der Mittellinie M weist der Reifen bevorzugt den größten Umfang auf. Die Form des Reifens kann auch als unvollständiger Torus aufgefasst werden, wobei er in radialer Richtung RR zur Felge hin eine umlaufende Aussparung im Bereich der nur in der Figur 10 ausschnittsweise dargestellten Felge aufweist. Reifen und Felge bilden zusammen ein Rad aus.

Die Figur 9 zeigt einen Teilquerschnitt durch den Kopfbereich eines Fahrzeugluftreifens 101 und Figur 10 zeigt einen Querschnitt durch einen Fahrzeugluftreifen 101, welcher als Radialreifen ausgeführt ist.

Als wesentliche Bestandteile weist der Fahrzeugluftreifen 101, den bevorzugt profilierten Laufstreifen 102, die Unterplatte 103 aus der ein leitfähiger Streifen 104 bis an die Oberfläche des Laufstreifens 102 hochgezogen ist, einen mehrlagigen Gürtel 105, welcher bei der gezeigten Ausführung aus zwei Lagen 105a, 105b besteht, eine zweilagig ausgeführte Gürtelbandage 106 im Schulterbereich des Fahrzeugluftreifens 101, welche die Kanten des Gürtels 105 abdeckt, zumindest bereichsweise eine luftdicht ausgeführten Innenschicht 107, eine zweilagig ausgeführte Karkasse 108, die in axialer Richtung AR von innen nach außen um zugfeste Wulstkerne 109 und den Wulstkernen 109 aufsitzenden Wulstkernprofilen 110 als Karkasshochschlag 112 herumgeführt ist, Wülste 111 sowie Seitenwände 113 auf. Der leitfähige Streifen 104 teilt den Laufstreifen 102 in Umfangsrichtung UR in zwei Bereiche.

Die beiden Lagen 105a, 105b des Gürtels 105 bestehen aus in eine Gummimischung eingebetteten Festigkeitsträgern aus Stahlkord, welche innerhalb jeder Lage parallel zueinander verlaufen, wobei die Stahlkorde der einen inneren Gürtellage 105a in kreuzender Anordnung zu den Stahlkorden der zweiten äußeren Gürtellage 105b orientiert sind und mit der Umfangsrichtung UR des Fahrzeugluftreifens 101 jeweils einen Winkel zwischen 20° und 35° einschließen. Auch die Karkasse 108 kann in herkömmlicher und bekannter Weise ausgeführt sein und somit in eine Gummimischung eingebettete, in radialer Richtung RR verlaufende Verstärkungsfäden aus einem textilen Material oder aus Stahlkord aufweisen. Die einlagigen Karkassfäden des als Radialreifen ausgeführten Fahrzeugluftreifens 101 verlaufen quer, bevorzugt in einem Winkel von 90 ° zu einer Mittelinie M welche den Zenit des Fahrzeugluftreifens 101 bildet. Die Karkassen sind somit im rechten Winkel zur Umfangsrichtung UR beziehungsweise zur Laufrichtung angebracht. Beim als Radialreifen ausgeführten Fahrzeugluftreifen 101 liegen die Kordfäden der Karkasse 108 im Winkel von 90 Grad zur Laufrichtung, also in der Seitenansicht "radial". Darüber sind mehrere Gürtellagen 105a, 105b stabilisierend eingebettet, welche selbst keine direkte Anbindung zu dem Wulst 111 haben. Die Bewegung der Seitenwand 113 wird daher nicht in die Lauffläche des Laufstreifens 102 übertragen. Die Karkasse 108 ist um die Wulstkerne 109 in axialer Richtung AR von innen nach außen geführt, ihre Hochschläge 112 verlaufen neben den Wulstkernprofilen 110 in radialer Richtung Richtung Gürtel 105.

Der Laufstreifen 102, die Unterplatte 103 sowie der leitfähige Streifen 104 werden aus dem Materialstrang 54 gebildet. Der Materialstrang 54 wird unter Verwendung des Extrusionswerkzeugs 50 und einer Steigdüse 1, 21 erzeugt. Nach der Herstellung des Materialstrangs 54 wird dieser auf das Maß des jeweiligen Fahrzeugluftreifens 101 konfektioniert. Der Materialstrang 54 bildet somit in radialer Richtung außen die äußersten Lagen im Aufbau des Fahrzeugluftreifens 101. Der leitfähige Streifen 104 stellt somit einen elektrisch leitenden Kontakt zwischen der Unterplatte 103 und der Fahrbahn her. Ein Profil erhält der Laufstreifen 102 beim Heizen des Fahrzeugluftreifen-Rohlings in einer Reifenform.

In der Figur 10 ist ein Felgenhorn 114 abgebildet, welches sich an den Wulst 111 des Fahrzeugluftreifens 101 anschließt. Das Felgenhorn 114 ist Teil einer leitfähig ausgebildeten Felge.

### BEZUGSZEICHENLISTE

- 1: Steigdüse
- 21: Steigdüse
- 2: Düsenkörper
- 3: Unterseite
- 4: Oberseite
- 5: Düsenaustritt
- 6: Aufsatz
- 26: Aufsatz
- 7: Auslassöffnung
- 27: Auslassöffnung
- 8: Mantelfläche
- 9: Düseneintritt
- 10: Fließkanal
- 30: Fließkanal
- 11: Formungsbereich / -kanal für extrudierbare Masse
- 31: Formungsbereich / -kanal für extrudierbare Masse
- 12: Ellipse
- 13: Einlasskontur des Düseneintritts 9
- 14: Trapez
- 15: Rechteck
- 16: Auslasskontur der Auslassöffnung 7
- 36: Auslasskontur der Auslassöffnung 27
- 17: Steg
- 37: Steg
- 18: Kante
- 38: Kante
- 40: Aufsatzkragen
- 41: Ausnehmungen
- 42: Aufsatzbereich
- 50: Extrusionswerkzeug
- 51: Unterteil
- 52: Oberteil
- 53: Durchtrittsöffnung
- 54: Materialstrang
- 55: Vorderseite
- 56: Rückseite
- 57: Zentrierung
- 58: Durchtrittskontur
- 59: Rückwandöffnung

- 101: Fahrzeugluftreifen
- 102: Laufstreifen
- 103: Unterplatte
- 104: leitfähiger Streifen
- 105: Gürtel
- 105a: Innere Gürtellage
- 105b: Äußere Gürtellage
- 106: Gürtelbandage
- 107: Innenschicht
- 108: Karkasse
- 109: Wulstkern
- 110: Wulstkernprofil
- 111: Wulst
- 112: Karkasshochschlag
- 113: Seitenwand
- 114: Felgenhorn

- 151: leitfähige extrudierbare Masse
- 152: nicht leitfähige extrudierbare Masse
- 152a: erster Bereich nicht leitfähiger extrudierbarer Masse
- 152b: zweiter Bereich nicht leitfähiger extrudierbarer Masse

- m: Massenstrom der extrudierbaren Masse [kg/s]

- S₁: senkrechte Symmetrieachse
- S₂: waagerechte Symmetrieachse im Bereich der Einlasskontur 13
- S₃: waagerechte Symmetrieachse im Bereich der Auslasskontur 16
- S₄: waagerechte Symmetrieachse im Bereich der Auslasskontur 36

- B₁: Breite der Einlasskontur 13 unterhalb der waagerechten Symmetrieachse S₂
- B₂: Breite der Einlasskontur 13 oberhalb der waagerechten Symmetrieachse S₂
- B₃: Breite der Auslasskontur 16 unterhalb der waagerechten Symmetrieachse S₃
- B₄: Breite der Auslasskontur 16 oberhalb der waagerechten Symmetrieachse S₃
- B₅: Breite des Aufsatzes 6 quer zur senkrechten Symmetrieachse S₁
- B₆: Breite der Auslasskontur 36 unterhalb der waagerechten Symmetrieachse S₄
- B₇: Breite der Auslasskontur 36 oberhalb der waagerechten Symmetrieachse S₄
- B₈: Breite des Aufsatzes 26 quer zur senkrechten Symmetrieachse S₁

- Ds: Dicke des Stegs 17
- L_{A}: Länge des Aufsatzes 6 in Richtung des Massenstroms m des Materialstrangs 54
- H_{NR}: Höhe der nicht leitfähigen extrudierbaren Masse auf der Rückseite 56 zur Ausbildung des Laufstreifens 102
- H_{LR}: Höhe der leitfähigen extrudierbaren Masse auf der Rückseite 56 zur Ausbildung der Unterplatte 102 und des leitfähigen Streifens 104
- H_{NV}: Höhe der nicht leitfähigen extrudierbaren Masse auf der Vorderseite 55 zur Ausbildung des Laufstreifens 102
- H_{LV}: Höhe der leitfähigen extrudierbaren Masse auf der Vorderseite 55 zur Ausbildung der Unterplatte 102 und des leitfähigen Streifens 104
- H_{DK}: Höhe des Düsenkörpers 2
- H_{DE}: Höhe des Düseneintritts 9
- H_{AK}: Höhe des Aufsatzkragens 40
- H_{AB}: Höhe des Aufsatzbereichs 42
- H_{MS}: Höhe des Materialstrangs 54 nach dem Verlassen des Extrusionswerkzeuges 50
- ΔH: gibt den durch den Massenstrom m überwundenen Höhenunterschied wieder
- α: Winkel Alpha gibt die Steigung des Massenstroms m wieder
- x: x-Achse des linkshändigen Koordinatensystems
- y: y-Achse des linkshändigen Koordinatensystems
- z: z-Achse des linkshändigen Koordinatensystems
- AR: axiale Richtung
- RR: radiale Richtung
- UR: Umfangsrichtung / Drehrichtung / Reifenumfangsrichtung
- M: Mittelinie / Zenith
- X: Breite des Streifens 104

## Patentansprüche

1. Steigdüse (1, 21) zur Herstellung eines Materialstrangs (54) gebildet aus mindestens zwei unterschiedlichen extrudierbaren Massen (151, 152), aufweisend einen Düsenkörper (2) mit einem Düseneintritt (9), einem Aufsatz (6, 26) mit einer Auslassöffnung (7, 27) und einem Fließkanal (10, 30), welcher den Düseneintritt (9) mit der Auslassöffnung (7, 27) verbindet, wobei zwischen dem Düseneintritt (9) in Fließrichtung eines Massenstroms (m) der mindestens zwei unterschiedlichen extrudierbaren Massen (151, 152) und der Auslassöffnung (7, 27) ein Höhenunterschied (ΔH) besteht, welcher zur Änderung der Höhenlage mindestens einer der extrudierbaren Massen (151, 152) beim Durchströmen des Fließkanals (10, 30) der Steigdüse (1, 21) im Bezug auf die mittlere Zuflusshöhe zum Düseneintritt (9) führt,
**dadurch gekennzeichnet, dass**
eine Kante (18, 38) am Aufsatz (6, 26), gebildet aus zwei im spitzen Winkel angeordneten Stegen (17, 37), zum Teilen des Massenstroms (m) mindestens einer extrudierbaren Masse (151, 152), vorgesehen ist.

2. Steigdüse (1, 21) nach Patentanspruch 1, **dadurch gekennzeichnet, dass** der Fließkanal (10, 30) ausgehend von dem Düseneintritt (9) eine Steigung mit einem Winkel (α) zur Überwindung eines Höhenunterschiedes (ΔH) in Richtung der Auslassöffnung (7, 27) aufweist.

3. Steigdüse (1, 21) nach einem der vorhergehenden Patentansprüche, **dadurch gekennzeichnet, dass** der Fließkanal (10, 30) ausgehend von dem Düseneintritt (9) in Richtung der Auslassöffnung (7, 27) trichterförmig ausgebildet ist.

4. Steigdüse (1, 21) nach einem der vorhergehenden Patentansprüche, **dadurch gekennzeichnet, dass** der Düseneintritt (9) eine eillinienförmige Einlasskontur (13) aufweist, wobei die Einlasskontur (13) mit ihrer kleineren Spitze senkrecht nach unten an einer senkrechten Symmetrieachse (S₁) ausgerichtet ist.

5. Steigdüse (1, 21) nach einem der vorhergehenden Patentansprüche, **dadurch gekennzeichnet, dass** die Auslassöffnung (7, 27) eine trapezförmige Auslasskontur (16, 36) aufweist, wobei die Auslasskontur (16, 36) mit ihrer kürzeren parallelen Linie senkrecht nach unten an der senkrechten Symmetrieachse (S₁) ausgerichtet ist.

6. Steigdüse (1, 21) nach Patentanspruch 5, **dadurch gekennzeichnet, dass** die trapezförmige Auslasskontur (16, 36) der Auslassöffnung (7, 27) ein gleichschenkliges oder symmetrisches Trapez (14) ausbildet.

7. Extrusionswerkzeug (50) aufweisend ein Unterteil (51), ein Oberteil (52), eine zwischen Unterteil (51) und Oberteil (52) angeordnete Durchtrittsöffnung (53) für mindestens eine extrudierbare Masse (151, 152) zur Erzeugung eines Materialstrangs (54), **dadurch gekennzeichnet, dass** in dem Unterteil (51) im Bereich der Durchtrittsöffnung (53) mindestens eine Steigdüse (1, 21) wie in einem der vorhergehenden Patentansprüche definiert angeordnet ist.

8. Extrusionswerkzeug (50) nach Patentanspruch 7, **dadurch gekennzeichnet, dass** in dem Unterteil (51) eine Rückwandöffnung (59) vorgesehen ist, zur Speisung der Steigdüse (1, 21) mit extrudierbarer Masse (151, 152).

9. Verfahren zur Herstellung eines Materialstrangs (54) aus mindestens zwei unterschiedlichen extrudierbaren Massen (151, 152) durch eine Steigdüse (1, 21) nach einem der Patentansprüche 1-6 und ein Extrusionswerkzeug (50), , wobei die Steigdüse (1, 21) einen Streifen (104) aus einer ersten extrudierbaren Masse (151) erzeugt, welche in ihren chemischen und/oder physikalischen Eigenschaften von mindestens einer weiteren extrudierbaren Masse (152) abweicht und dass der Streifen (104), gebildet aus der ersten extrudierbaren Masse (151) die weitere extrudierbare Masse (152) in mindestens zwei Bereiche (152a, 152b) teilt.

10. Verfahren nach Patentanspruch 9, **dadurch gekennzeichnet, dass** die extrudierbaren Massen (151, 152) aus Gummi-Mischungen gebildet sind.

11. Verfahren nach einem der Patentansprüche 9 oder 10, **dadurch gekennzeichnet, dass** die durch die Steigdüse (1, 21) geförderte extrudierbare Masse (151) elektrisch leitfähig ausgeführt ist.

## Claims

1. Riser nozzle (1, 21) for producing a material strand (54) formed from at least two different extrudable compounds (151, 152), having a nozzle body (2) with a nozzle inlet (9), an attachment (6, 26) with an outlet opening (7, 27) and a flow channel (10, 30) which connects the nozzle inlet (9) to the outlet opening (7, 27), wherein there is a height difference (ΔH) between the nozzle inlet (9) and the outlet opening (7, 27) in a flow direction of a mass flow (ṁ) of the at least two different extrudable compounds (151, 152), said height difference having the effect that the height position of at least one of the extrudable compounds (151, 152) when flowing through the flow channel (10, 30) of the riser nozzle (1, 21) is changed in relation to the mean inflow height to the nozzle inlet (9),
**characterized in that**
an edge (18, 38) on the attachment (6, 26), which is formed from two webs (17, 37) arranged at an acute angle, is provided for the purpose of dividing the mass flow (m) of at least one extrudable compound (151, 152).

2. Riser nozzle (1, 21) according to Patent Claim 1, **characterized in that** the flow channel (10, 30), proceeding from the nozzle inlet (9), has a gradient with an angle (α) for the purpose of overcoming a height difference (ΔH) in the direction of the outlet opening (7, 27).

3. Riser nozzle (1, 21) according to either of the preceding patent claims, **characterized in that** the flow channel (10, 30) is of funnel-like form proceeding from the nozzle inlet (9) in the direction of the outlet opening (7, 27).

4. Riser nozzle (1, 21) according to one of the preceding patent claims, **characterized in that** the nozzle inlet (9) has an egg-shaped inlet contour (13), wherein the relatively small tip of the inlet contour (13) is oriented vertically downward in relation to a vertical axis of symmetry (S₁).

5. Riser nozzle (1, 21) according to one of the preceding patent claims, **characterized in that** the outlet opening (7, 27) has a trapezoidal outlet contour (16, 36), wherein the relatively short parallel line of the outlet contour (16, 36) is oriented vertically downward in relation to the vertical axis of symmetry (S₁).

6. Riser nozzle (1, 21) according to Patent Claim 5, **characterized in that** the trapezoidal outlet contour (16, 36) of the outlet opening (7, 27) forms an isosceles or symmetrical trapezium (14).

7. Extrusion tool (50) having a lower part (51), an upper part (52) and a passage opening (53), which is arranged between the lower part (51) and the upper part (52), for at least one extrudable compound (151, 152) for the purpose of producing a material strand (54), **characterized in that** at least one riser nozzle (1, 21) as defined in one of the preceding patent claims is arranged in the lower part (51) in the region of the passage opening (53).

8. Extrusion tool (50) according to Patent Claim 7, **characterized in that** a rear wall opening (59) is provided in the lower part (51) for the purpose of feeding extrudable compound (151, 152) to the riser nozzle (1, 21) .

9. Method for producing a material strand (54) composed of at least two different extrudable compounds (151, 152) by means of a riser nozzle (1, 21) according to one of Patent Claims 1-6 and an extrusion tool (50), wherein the riser nozzle (1, 21) produces a strip (104) of a first extrudable compound (151), the chemical and/or physical properties of which differ from at least one further extrudable compound (152), and in that the strip (104) formed from the first extrudable compound (151) divides the further extrudable compound (152) into at least two regions (152a, 152b).

10. Method according to Patent Claim 9, **characterized in that** the extrudable compounds (151, 152) are formed from rubber mixtures.

11. Method according to either of Patent Claims 9 and 10, **characterized in that** the extrudable compound (151) conveyed by the riser nozzle (1, 21) is of electrically conductive embodiment.

## Revendications

1. Buse montante (1, 21) destinée à produire un cordon de matériau (54) formé d'au moins deux matières extrudables différentes (151, 152), ladite buse montante comportant un corps de buse (2) pourvu d'une entrée de buse (9), d'un embout (6, 26) muni d'une ouverture de sortie (7, 27) et un canal d'écoulement (10, 30) qui relie l'entrée de buse (9) à l'ouverture de sortie (7, 27), une différence de hauteur (ΔH), qui entraîne la modification de la position en hauteur d'au moins une des matières extrudables (151, 152), lorsque celle-ci s'écoule à travers le canal d'écoulement (10, 30) de la buse montante (1, 21), par rapport à la hauteur d'entrée moyenne de l'entrée de buse (9), étant ménagée entre l'entrée de buse (9) dans le sens d'écoulement d'un flux de matière (m) des au moins deux matières extrudables différentes (151, 152) et l'ouverture de sortie (7, 27)
**caractérisée en ce que**
un bord (18, 38) au niveau de l'embout (6, 26), formé de deux nervures (17, 37) disposées suivant un angle aigu, est prévu pour diviser le flux de matière (m) d'au moins une matière extrudable (151, 152).

2. Buse montante (1, 21) selon la revendication 1, **caractérisée en ce que** le canal d'écoulement (10, 30) partant de l'entrée de buse (9) présente une pente d'un angle (α) pour surmonter une différence de hauteur (ΔH) en direction de l'orifice de sortie (7, 27).

3. Buse montante (1, 21) selon l'une des revendications précédentes, **caractérisée en ce que** le canal d'écoulement (10, 30) partant de l'entrée de buse (9) en direction de l'orifice de sortie (7, 27) est en forme d'entonnoir.

4. Buse montante (1, 21) selon l'une des revendications précédentes, **caractérisée en ce que** l'entrée de buse (9) présente un contour d'entrée ovale (13), le contour d'entrée (13) étant orienté de sorte que sa plus petite pointe soit perpendiculaire vers le bas à un axe de symétrie perpendiculaire (S₁).

5. Buse montante (1, 21) selon l'une des revendications précédentes, **caractérisée en ce que** l'ouverture de sortie (7, 27) présente un contour de sortie trapézoïdal (16, 36), le contour de sortie (16, 36) étant orienté de sorte que sa ligne parallèle la plus courte soit perpendiculaire vers le bas à l'axe de symétrie perpendiculaire (S₁).

6. Buse montante (1, 21) selon la revendication 5, **caractérisée en ce que** le contour de sortie trapézoïdal (16, 36) de l'orifice de sortie (7, 27) forme un trapèze isocèle ou symétrique (14).

7. Outil d'extrusion (50) comportant une partie inférieure (51), une partie supérieure (52), une ouverture de passage (53) ménagée entre la partie inférieure (51) et la partie supérieure (52) et destinée à au moins une matière extrudable (151, 152) destinée la fabrication d'un cordon de matériau (54), **caractérisé en ce qu'**au moins une buse montante (1, 21) telle que définie dans l'une des revendications précédentes est disposée dans la partie inférieure (51) au niveau de l'ouverture de passage (53).

8. Outil d'extrusion (50) selon la revendication 7, **caractérisé en ce qu'**une ouverture de paroi arrière (59) est ménagée dans la partie inférieure (51) pour alimenter la buse montante (1, 21) en matière extrudable (151, 152).

9. Procédé de fabrication d'un cordon de matériau (54) formé d'au moins deux matières extrudables différentes (151, 152) par le biais d'une buse montante (1, 21) selon l'une des revendications 1 à 6 et un outil d'extrusion (50), la buse montante (1, 21) produisant une bande (104) formée d'une première matière extrudable (151) qui diffère par ses propriétés chimiques et/ou physiques d'au moins une autre matière extrudable (152) et la bande (104) formée de la première matière extrudable (151) divisant l'autre matière extrudable (152) en au moins deux zones (152a, 152b) .

10. Procédé selon la revendication 9, **caractérisé en ce que** les matières extrudables (151, 152) sont formées de mélanges de caoutchoucs.

11. Procédé selon l'une des revendications 9 ou 10, **caractérisé en ce que** la matière extrudable (151) acheminée à travers la buse montante (1, 21) est conçue pour être électriquement conductrice.
